# EUROPEAN PATENT APPLICATION

(11) **EP 4 460 102 A1**
(43) Date of publication of application: **06.11.2024**
(21) Application number: 22923485.1
(22) Date of filing: 07.12.2022
(51) Int. Cl.: H04W 48/18

(54) **SLICE-BASED COMMUNICATION METHOD AND APPARATUS**

(30) Priority: 27.01.2022 CN 202210103156
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: MERH-IP Matias Erny Reichl Hoffmann Patentanwälte PartG mbB
(86) International application number: PCT/CN2022/137158
(87) International publication number: WO 2023/142695

(57) **Abstract**

Embodiments of this application provide a slice-based communication method and apparatus, including: After obtaining information about a target network slice for a terminal device, a first access and mobility management function network element may determine that at least one network slice in the target network slice corresponds to a session in an active state of the terminal device. Then, the first access and mobility management function network element may send, to a first access network device, indication information for handing over the session in the active state to a cell of a tracking area that supports the target network slice. In this way, service stability of the terminal device can be improved, the session in the active state of the terminal device is prevented from being interrupted in a process in which the terminal device accesses the cell that supports the target network slice for the terminal device and registers with the network slice, and user experience is improved.

## Description

This application claims priority to Chinese Patent Application No. 202210103156.7 filed with the China National Intellectual Property Administration on January 27, 2022 and entitled "SLICE-BASED COMMUNICATION METHOD AND APPARATUS THEREOF", which is incorporated herein by reference in its entirety.

### TECHNICAL FIELD

This application relates to the communication field, and more specifically, to a slice-based communication method and an apparatus thereof.

### BACKGROUND

Currently, in a mobile communication network, a plurality of logical networks may be provided by using network slices, and each logical network serves a specific service type, industry, or user, to meet differentiated requirements for different services, industries, or users.

However, in a process in which a terminal device registers with a network, a service of the terminal device may be affected, or a network slice accessed by the terminal device may be limited. A solution in which the terminal device accesses the network slice still needs to be improved, and user experience still needs to be improved.

### SUMMARY

Embodiments of this application provide a slice-based communication method, to improve service stability of a terminal device, prevent a service that is of the terminal device and that is transmitted through an active session from being affected in a process in which the terminal device accesses a cell of a target network slice that supports the terminal device and registers with the network slice, and improve user experience.

According to a first aspect, a slice-based communication method is provided, including: A first access and mobility management function network element obtains information about a target network slice for a terminal device. The first access and mobility management function network element determines that at least one network slice in the target network slice corresponds to a session in an active state of the terminal device. The first access and mobility management function network element sends, to a first access network device, indication information for handing over the session in the active state to a cell of a tracking area that supports the target network slice.

In a possible implementation, the first access and mobility management function network element may obtain, from a context of the terminal device, a single-network slice selection assistance information attribute that is of a session established by the terminal device and that is in a current serving network, that is, a network slice corresponding to the established session.

In another possible implementation, the first access and mobility management function network element may obtain, from a registration request of the terminal device, a status (for example, the status of the session may include the active state, an inactive state, a deactivated state, or a released state) of the established session of the terminal device.

In yet another possible implementation, the first access and mobility management function network element may determine, based on the session in the active state and the target network slice, that the at least one network slice in the target network slice corresponds to the session in the active state.

Based on this solution, after determining that the at least one network slice in the target network slice corresponds to the session in the active state of the terminal device, the first access and mobility management function network element may send, to the first access network device, the indication information for handing over the session in the active state to the cell of the tracking area that supports the target network slice. In this way, service stability of the terminal device can be improved, the session in the active state of the terminal device is prevented from being interrupted in a process in which the terminal device accesses the cell that supports the target network slice for the terminal device and registers with the network slice, and user experience is improved.

With reference to the first aspect, in some implementations of the first aspect, the indication information is the information about the target network slice.

With reference to the first aspect, in some implementations of the first aspect, the first access and mobility management function network element sends the information about the target network slice to the first access network device.

For example, the first access and mobility management function network element may send the information about the target network slice to the terminal device. The information about the target network slice indicates to hand over the session in the active state to the cell of the tracking area that supports the target network slice. Alternatively, the first access and mobility management function network element may send, to the terminal device, the indication information for handing over the session in the active state to the cell of the tracking area that supports the target network slice, and also send the information about the target network slice.

With reference to the first aspect, in some implementations of the first aspect, that a first access and mobility management function network element obtains information about a target network slice for a terminal device includes: The first access and mobility management function network element determines the target network slice based on a used network slice in a first allowed network slice for the UE.

For example, if determining that the terminal device has established a session (that is, the used network slice for the terminal device) by using one or more network slices (for example, {network slice #4}) in the first allowed network slice, the first access and mobility management function network element determines that the one or more network slices (for example, {network slice #4}) belong to a part of the target network slice (for example, the target network slice).

With reference to the first aspect, in some implementations of the first aspect, that the first access and mobility management function network element determines the target network slice based on a used network slice in a first allowed network slice includes: The first access and mobility management function network element determines the target network slice based on the used network slice in the first allowed network slice and a to-be-used network slice for the UE.

For example, the first access and mobility management function network element may determine the target network slice (for example, the target network slice may be {network slice #2, network slice #3, network slice #4}) for the terminal device based on the used network slice (for example, {network slice #3, network slice #4}) or the to-be-used network slice (for example, {network slice #2}) for the terminal device.

With reference to the first aspect, in some implementations of the first aspect, that a first access and mobility management function network element obtains information about a target network slice for UE includes: The first access and mobility management function network element receives the information about the target network slice from a network slice selection function network element.

Based on this solution, even if the first access and mobility management function network element with which the terminal device currently registers does not support the to-be-used network slice for the terminal device, and the terminal device has the session in the active state, after the session in the active state of the terminal device is handed over, the terminal device can re-register with a second access and mobility management function network element that supports the target network slice. This avoids affecting the session in the active state of the terminal device, and improves user experience.

With reference to the first aspect, in some implementations of the first aspect, the first access and mobility management function network element stores the target network slice to a context of the terminal device; and after the session in the active state is handed over, the first access and mobility management function network element receives a registration request of the terminal device, and determines a second allowed network slice for the terminal device based on the target network slice in the context.

For example, the first access and mobility management function network element may store the target network slice to the context of the terminal device. After the session in the active state is handed over, the first access and mobility management function network element receives the registration request initiated by the terminal device in the tracking area that supports the target network slice, and determines the second allowed network slice for the terminal device based on a requested network slice carried in the registration request and the target network slice in the context. The second allowed network slice is used by the terminal device to subsequently establish a session.

With reference to the first aspect, in some implementations of the first aspect, the first access and mobility management function network element stores the target network slice to a context of the terminal device; and the first access and mobility management function network element sends information about the context to a second access and mobility management function network element. An access network device that manages the cell of the tracking area that supports the target network slice is connected to the second access and mobility management function network element. The target network slice in the information about the context is used to determine a second allowed network slice for the terminal device after the session in the active state is handed over and a registration request is initiated.

With reference to the first aspect, in some implementations of the first aspect, the first access and mobility management function network element sends, to the first access network device, radio access technology/frequency selection priority (radio access technology/frequency selection priority, RFSP) information corresponding to the target network slice. The RFSP information is used to determine a radio measurement instruction. The radio measurement instruction is used by the terminal device to discover, before the session in the active state is handed over, the cell of the tracking area (Tracking area, TA) that supports the target network slice.

In a possible implementation, the RFSP information is determined by the first access and mobility management function network element according to a local configuration policy.

In another possible implementation, the RFSP information is obtained by the first access and mobility management function network element through requesting from a policy control network element.

According to a second aspect, a slice-based communication method is provided, including: A first access network device receives information about a target network slice for a terminal device from a first access and mobility management function network element. The first access network device determines to hand over a session that is in an active state, that is of the terminal device, and that corresponds to at least one network slice in the target network slice. The first access network device hands over the session in the active state to a cell of a TA that supports the target network slice.

Based on this solution, even if the first access and mobility management function network element with which the terminal device currently registers does not support the network slice for the terminal device, and the terminal device has the session in the active state, the terminal device can re-register with a second access and mobility management function network element that supports the target network slice, the terminal device can re-register with a network in a new tracking area, and the new tracking area supports a used network slice and a to-be-used network slice. This avoids affecting the session in the active state of the terminal device during handover, improves service stability of the terminal device, and improves user experience.

With reference to the second aspect, in some implementations of the second aspect, that the first access network device determines to hand over a session that is in an active state, that is of the terminal device, and that corresponds to at least one network slice in the target network slice includes: The first access network device receives, from the first access and mobility management function network element, indication information for handing over the session in the active state to the cell of the TA that supports the target network slice. The first access network device determines, based on the indication information, to hand over the session in the active state.

For example, the first access and mobility management function network element may send an N2 interface message to the first access network device. The N2 interface message carries at least one of the indication information for handing over the session in the active state to the cell of the tracking area that supports the target network slice and the information about the target network slice.

In addition, the N2 message may further carry a registration response message sent by the first access and mobility management function network element to the terminal device via the first access network device. The registration response message indicates that the terminal device successfully registers with the first access and mobility management function network element.

With reference to the second aspect, in some implementations of the second aspect, the indication information is the information about the target network slice.

With reference to the second aspect, in some implementations of the second aspect, the first access network device receives the indication information and the information about the target network slice from the first access and mobility management function network element.

With reference to the second aspect, in some implementations of the second aspect, that the first access network device determines to hand over a session that is in an active state, that is of the terminal device, and that corresponds to at least one network slice in the target network slice includes: The first access network device determines, based on the session that is in the active state and that corresponds to the at least one network slice in the target network slice, to hand over the session in the active state.

With reference to the second aspect, in some implementations of the second aspect, the first access network device determines a radio measurement instruction of the terminal device. The radio measurement instruction is used to discover, before the session in the active state is handed over, the cell of the TA that supports the target network slice.

With reference to the second aspect, in some implementations of the second aspect, that the first access network device determines a radio measurement instruction of the terminal device includes: The first access network device determines the radio measurement instruction based on the information about the target network slice.

With reference to the second aspect, in some implementations of the second aspect, that the first access network device determines the radio measurement instruction includes: The first access network device receives, from the first access and mobility management function network element, RFSP information corresponding to the target network slice. The first access network device determines the radio measurement instruction based on the RFSP information.

Then, the first access network device may send the radio measurement instruction of the terminal device to the terminal device based on a radio resource management configuration (Radio resource management configuration, RRM configuration) message. The terminal device sends a radio measurement report to the first access network device. If the radio measurement report indicates that signal strength of the cell of the tracking area that supports the target network slice reaches a preset threshold, the first access network device determines to start handover.

According to a third aspect, a slice-based communication method is provided, including: A network device obtains information about a requested network slice for a terminal device and at least one piece of information about a used network slice for the terminal device or a to-be-used network slice for the terminal device. The network device determines a first allowed network slice for the terminal device based on the requested network slice and at least one of the used network slice or the to-be-used network slice. The network device sends information about the first allowed network slice.

For example, the network device may send, to the terminal device, a registration response message indicating that the terminal device successfully registers. The registration response message carries the information about the first allowed network slice.

Based on this solution, after obtaining the information about the requested network slice for the terminal device and the at least one piece of the information about the used network slice for the terminal device or the to-be-used network slice for the terminal device, the network device may determine the first allowed network slice for the terminal device based on the information, and send the information about the first allowed network slice. Because a quantity of network slices included in the first allowed network slice is reduced through processing in this embodiment, an appropriate allowed network slice can be determined based on a communication requirement of the terminal device, to maximize a range of a registration area corresponding to the allowed network slice, and reduce a signaling load in a movement process of the terminal device.

With reference to the third aspect, in some implementations of the third aspect, the network device obtains information about a network slice supported by a TA in which the terminal device is located. When the TA does not support at least one network slice in the to-be-used network slice, the network device determines a target network slice for the terminal device based on the requested network slice and the at least one of the used network slice or the to-be-used network slice. The network device sends information about the target network slice.

With reference to the third aspect, in some implementations of the third aspect, that the network device determines a target network slice for the terminal device based on the requested network slice and the at least one of the used network slice or the to-be-used network slice includes: The network device selects a network slice that belongs to the at least one of the used network slice or the to-be-used network slice and a network slice that belongs to the requested network slice, to constitute the target network slice.

The target network slice includes the network slice that is in the requested network slice for the terminal device and that is not supported by a current tracking area of the terminal device, but may be supported by another tracking area (for example, a tracking area of another frequency band that overlaps the current tracking area of the terminal device). For example, the information about the target network slice may be target NSSAI.

The target network slice includes the used network slice in the allowed network slice that is stored in a context of the terminal device, and the to-be-used network slice. The used network slice may be a network slice corresponding to a session that has been established by the terminal device, and the to-be-used network slice may be a network slice for a session that the terminal device expects to establish. In addition, the session that the terminal device expects to establish may be a session that the terminal device expects to establish but has not established, or may be a session that has been released but the terminal device expects to establish (for example, a session in a service continuity mode 2 or a mode 3).

In an implementation, if the terminal device already registers with the network device, the network device may obtain a previously stored allowed network slice for the terminal device. If one or more network slices in the requested network slice carried in a registration request message initiated by the terminal device do not belong to the allowed network slice, the one or more network slices are to-be-used network slices. The network device may select the network slice that is in the requested network slice and that belongs to the at least one of the used network slice or the to-be-used network slice, to constitute the target network slice.

With reference to the third aspect, in some implementations of the third aspect, at least one network slice in the target network slice does not belong to the network slice supported by the TA.

For example, it is assumed that the network slices supported by the TA in which the terminal device is currently located are {network slice #2, network slice #3, network slice #4}, the allowed network slices that are for the terminal device and that are previously stored by the network device are {network slice #3, network slice #4}, and the requested network slices are {network slice #1, network slice #2, network slice #4}. If the network device determines that the to-be-used network slices are {network slice #1, network slice #2}, and the used network slice is {network slice #3 }, the target network slices are {network slice #1, network slice #2, network slice #3}.

With reference to the third aspect, in some implementations of the third aspect, that the network device determines a first allowed network slice for the terminal device based on the requested network slice and at least one of the used network slice or the to-be-used network slice includes: The network device selects the network slice that belongs to the at least one of the used network slice or the to-be-used network slice and that belongs to the requested network slice, to constitute the first allowed network slice.

For example, if the TA in which the terminal device is currently located supports {network slice #1, network slice #2, network slice #3}, the first access and mobility management function network element may determine the first allowed network slice (for example, {network slice #2, network slice #3}) for the terminal device based on the used network slice (for example, {network slice #3}), the to-be-used network slice (for example, {network slice #2}), and the requested network slice (for example, {network slice #1, network slice #2, network slice #3}) for the terminal device. Although the TA in which the terminal device is currently located also supports the network slice #1 in the requested network slice, because the network slice #1 belongs to neither the used network slice nor the to-be-used network slice, the network slice #1 is not included in the first allowed network slice. In other words, if a network slice requested by the terminal device does not belong to the used network slice for the terminal device or the to-be-used network slice for the terminal device, even if the TA in which the terminal device is currently located supports the network slice, the network device excludes the network slice when determining the first allowed network slice. Alternatively, it may be understood that the network slice is filtered. Therefore, each network slice in the finally determined first allowed network slice belongs to the used network slice for the terminal device or the to-be-used network slice for the terminal device. Compared with an allowed network slice determined in the conventional technology, an allowed network slice determined in this way includes a smaller quantity of network slices.

With reference to the third aspect, in some implementations of the third aspect, the network device includes a first network slice selection function network element.

With reference to the third aspect, in some implementations of the third aspect, that a network device obtains at least one piece of information about a used network slice for the terminal device or a to-be-used network slice for the terminal device includes: The network device receives the at least one piece of information about the used network slice and the to-be-used network slice that are from an access and mobility management function network element.

In addition, when the network device includes the network slice selection function network element, after the network device receives a network slice selection request from an access and mobility management function network element (hereinafter referred to as a first access and mobility management function network element), if the network device determines that a tracking area in which a terminal device is currently located supports a requested network slice for the terminal device, but the first access and mobility management function network element does not support the requested network slice for the terminal device, the network device may determine a new access and mobility management function network element (hereinafter referred to as a second access and mobility management function network element) that is connected to the tracking area in which the terminal device is currently located and that supports the requested network slice for the terminal device, and send information about the second access and mobility management function network element to the first access and mobility management function network element. Then, the first access and mobility management function network element forwards a registration request message of the terminal device to the second access and mobility management function network element for processing. Finally, if the network device determines that the tracking area in which the terminal device is currently located does not support the requested network slice for the terminal device, the network device may determine the target network slice for the terminal device, and return the information about the second access and mobility management function network element to the first access and mobility management function network element.

With reference to the third aspect, in some implementations of the third aspect, the network device includes an access and mobility management function network element.

With reference to the third aspect, in some implementations of the third aspect, the network device receives a second allowed network slice for the terminal device from a second network slice selection function network element. The network device selects, from the second allowed network slice, the network slice that belongs to the at least one of the used network slice or the to-be-used network slice, to constitute a third allowed network slice. The network device sends information about the third allowed network slice to the terminal device.

The second allowed network slice may be determined by the second network slice selection function network element in the conventional technology, that is, determined by the second network slice selection function network element by using the requested network slice carried in the registration request message of the terminal device and the network slice supported by the registration area in which the terminal device is located.

With reference to the third aspect, in some implementations of the third aspect, the network device obtains information about a first rejected network slice for the terminal device. The network device deletes a network slice that is supported by any TA in a registration area (Registration Area, RA) for the terminal device and that is in the first rejected network slice, to obtain a second rejected network slice for the terminal device, where the RA is determined based on the second allowed network slice. The network device sends information about the second rejected network slice to the terminal device.

For example, if the first rejected network slices are {network slice #1, network slice #2, network slice #3, network slice #4}, and the network slices supported by the tracking area in the registration area are {network slice #2, network slice #3}, the second rejected network slices are {network slice #1, network slice #4}.

It should be noted that this manner of determining the rejected network slice does not impose any limitation on determining the third allowed network slice in this manner. For example, an allowed network slice may be determined in a manner in the conventional technology or in another manner, and a corresponding registration area may be determined. When the rejected network slice is determined, the network slice supported by any tracking area in the registration area is considered to be removed from the rejected network slice, to reduce a quantity of network slices included in the rejected network slice.

For example, the network device may send the registration response message to the terminal device. The registration response message indicates that the terminal device successfully registers, and may further carry the information about the second rejected network slice.

Based on this solution, the first rejected network slice is further processed to obtain the second rejected network slice, so that fewer network slices are rejected for the terminal device, and a range of network slices that can be used by the terminal device is maximized, thereby expanding a range of the corresponding registration area and reducing a signaling load in a movement process of the terminal.

With reference to the third aspect, in some implementations of the third aspect, that a network device obtains at least one piece of information about a used network slice or a to-be-used network slice includes at least one of the following manners: The network device determines the information about the used network slice based on session status information of the terminal device. Alternatively, the network device determines the information about the to-be-used network slice based on the requested network slice and a fourth allowed network slice in a context of the terminal device. Alternatively, the network device receives communication analysis result information of the terminal device from a network data analytics function network element, and determines the information about the to-be-used network slice based on the communication analysis result information.

According to a fourth aspect, a communication apparatus is provided. The apparatus is configured to perform the method provided in the first aspect, the second aspect, or the third aspect. Specifically, the apparatus may include a unit and/or a module, for example, a processing unit and/or a communication unit, configured to perform the method provided in any one of the first aspect or the implementations of the first aspect, any one of the second aspect or the implementations of the second aspect, or any one of the third aspect or the implementations of the third aspect.

In an implementation, the apparatus is a first access and mobility management function network element. When the apparatus is the first access and mobility management function network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first access and mobility management function network element. When the apparatus is the chip, the chip system, or the circuit used in the first access and mobility management function network element, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

In an implementation, the apparatus is a first access network device. When the apparatus is the first access network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first access network device. When the apparatus is the chip, the chip system, or the circuit used in the first access network device, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

In an implementation, the apparatus is a network device. When the apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the core network element, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a seventh aspect, a communication apparatus is provided. The apparatus includes: a memory, configured to store a program; at least one processor, configured to execute the computer program or instructions stored in the memory, to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, or any one of the fifth aspect or the implementations of the fifth aspect.

In an implementation, the apparatus is a first session management function network element.

In another implementation, the apparatus is a chip, a chip system, or a circuit used in the first session management function network element.

In an implementation, the apparatus is a terminal device.

In another implementation, the apparatus is a chip, a chip system, or a circuit used in a terminal device.

In an implementation, the apparatus is a core network element.

In another implementation, the apparatus is a chip, a chip system, or a circuit used in a core network element.

In an implementation, the apparatus is an access and mobility management function network element.

In another implementation, the apparatus is a chip, a chip system, or a circuit used in an access and mobility management function network element.

According to an eighth aspect, this application provides a processor, configured to perform the method provided in each of the foregoing aspects.

Unless otherwise specified, operations such as sending and obtaining/receiving related to the processor may be understood as operations such as output, receiving, and input of the processor, or may be understood as sending and receiving operations performed by a radio frequency circuit and an antenna, if the operations do not conflict with actual functions or internal logic of the operations in related descriptions. This is not limited in this application.

According to a ninth aspect, a computer-readable storage medium is provided. The computer-readable medium stores program code executed by a device. The program code is used to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, or any one of the fifth aspect or the implementations of the fifth aspect.

According to a tenth aspect, a computer program product including instructions is provided. When the computer program product runs on a computer, the computer is enabled to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, or any one of the fifth aspect or the implementations of the fifth aspect.

According to an eleventh aspect, a chip is provided. The chip includes a processor and a communication interface. The processor reads, through the communication interface, instructions stored in a memory, to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, or any one of the fifth aspect or the implementations of the fifth aspect.

Optionally, in an implementation, the chip further includes a memory. The memory stores a computer program or instructions. The processor is configured to execute the computer program or the instructions stored in the memory. When the computer program or the instructions is or are executed, the processor is configured to perform the method provided in any one of the first aspect or the implementations of the first aspect, any one of the second aspect or the implementations of the second aspect, any one of the third aspect or the implementations of the third aspect, any one of the fourth aspect or the implementations of the fourth aspect, or any one of the fifth aspect or the implementations of the fifth aspect.

According to a twelfth aspect, a multicast/broadcast communication system is provided, including the first session management function network element and the access and mobility management function network element.

### BRIEF DESCRIPTION OF DRAWINGS

FIG. 1 is a schematic diagram of a network architecture;
FIG. 2 is a schematic diagram of network slice deployment;
FIG. 3 is another schematic diagram of network slice deployment;
FIG. 4 is a schematic diagram of a slice-based communication method 400 according to an embodiment of this application;
FIG. 5 is a schematic diagram of a slice-based communication method 500 according to an embodiment of this application;
FIG. 6 is a schematic diagram of a slice determining method 600 according to an embodiment of this application;
FIG. 7A and FIG. 7B are a schematic diagram of a slice-based communication method 700 according to an embodiment of this application;
FIG. 8A and FIG. 8B are a schematic diagram of a slice-based communication method 800 according to an embodiment of this application;
FIG. 9 is a schematic diagram of a slice determining method 900 according to an embodiment of this application;
FIG. 10 is a schematic diagram of a slice determining method 1000 according to an embodiment of this application;
FIG. 11 is a schematic block diagram of a communication apparatus 1100 according to an embodiment of this application;
FIG. 12 is a schematic block diagram of a communication apparatus 1200 according to an embodiment of this application; and
FIG. 13 is a simplified schematic diagram of a structure of a network device 1300.

### DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device-to-device (device to device, D2D) communication system, a vehicle-to-everything (vehicle-to-everything, V2X) communication system, a machine-to-machine (machine to machine, M2M) communication system, a machine type communication (machine type communication, MTC) system, an internet of things (internet of things, IoT) communication system, or another communication system.

First, a network architecture applicable to this application is briefly described as follows.

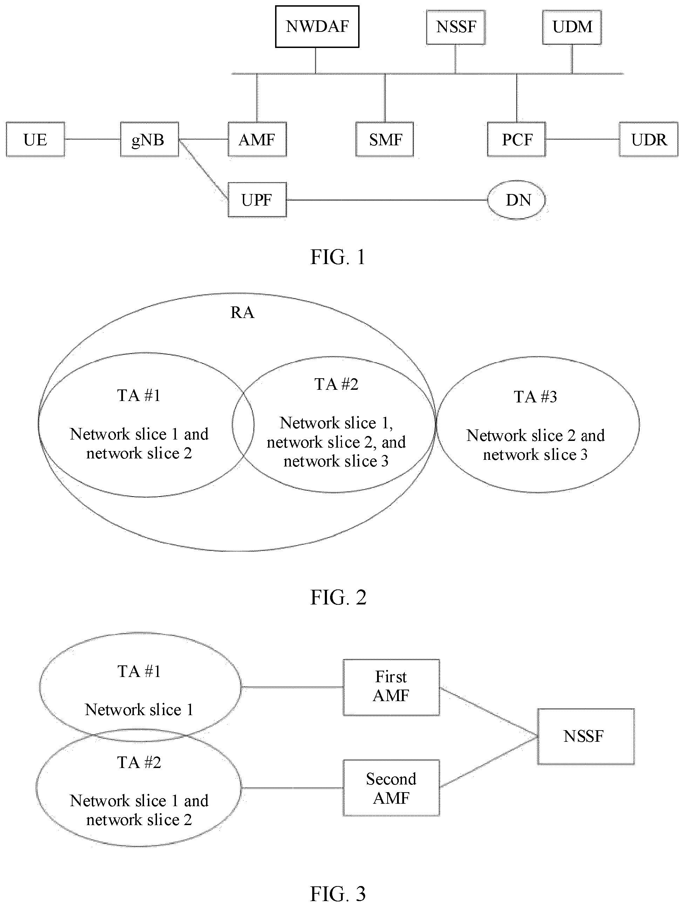

For example, FIG. 1 is a schematic diagram of a network architecture.

As shown in FIG. 1, a 5G system (the 5th generation system, 5GS) is used as an example of the network architecture. The network architecture may include but is not limited to: a network slice selection function (network slice selection function, NSSF), a next-generation node base station (next generation Node Base station, gNB), unified data management (unified data management, UDM), a policy control function (policy control function, PCF), an access and mobility management function (access and mobility management function, AMF), a session management function (session management function, SMF), user equipment (user equipment, UE), a user plane function (user plane function, UPF), a data network (data network, DN), a network data analytics function (Network data analytics function, NWDAF), and a unified data repository (unified data repository, UDR).

The DN may be the internet. The NSSF, NWDAF, UDR, UDM, PCF, AMF, SMF, and UPF belong to network elements in a core network. Because the 5G system is used as the example in FIG. 1, the core network may be referred to as a 5G core network (5G core network, 5GC, or 5GCN).

The following briefly describes network elements shown in FIG. 1.
1. The UE may be referred to as user equipment, a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a wearable device, a terminal device in a 5G network, and a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement all or some of functions without depending on smartphones, such as smart watches or smart glasses, and devices that focus only on a type of application function and need to work with other devices such as smartphones, such as various smart bands or smart jewelry for monitoring physical symptoms.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things.

It should be noted that the terminal device and the access network device may communicate with each other by using an air interface technology (for example, an NR technology or an LTE technology). Terminal devices may also communicate with each other by using the air interface technology (for example, the NR technology or the LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete device.

2. The gNB may provide a function of accessing a communication network for a terminal device, and may specifically include a wireless network device in a 3rd generation partnership project (3rd generation partnership project, 3GPP) network, or may include an access point in a non-3GPP (non-3GPP) network. In addition, the gNB may also be referred to as an access network (Access network, AN) device.

The gNB device may use different radio access technologies. Currently, there are two types of radio access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with 3GPP standard specifications. For example, a gNB in the 5G system may be referred to as an access network device or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), and the like. A gNB device may enable the terminal device to be interconnected with a 3GPP core network by using a non-3GPP technology.

The gNB device can be further used for functions, such as radio resource management, quality of service (quality of service, QoS) management, and data compression and encryption, at the air interface. The gNB device provides an access service for the terminal device, and further forwards a control signal and user data between the terminal device and the core network.

The gNB device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP). Alternatively, the gNB device may include a transmission point (TRP or TP) in a 5G (for example, NR) system, or one antenna panel or a group of antenna panels (including a plurality of antenna panels) of a base station in the 5G system. Alternatively, the gNB device may include a network node constituting a gNB or a transmission point, for example, a distributed unit (distributed unit, DU) or a base station in a next-generation 6G communication system. A specific technology and a specific device form that are used by the gNB device are not limited in embodiments of this application.

3. The AMF is mainly used for registration, mobility management, and a tracking area update procedure of a terminal in a mobile network. An access management network element terminates a non-access stratum (non-access stratum, NAS) message, completes registration management, connection management, and reachability management, allocates a tracking area list (track area list, TA list), completes mobility management and the like, and transparently routes a session management (session management, SM) message to a session management network element. In the 5th generation (5th generation, 5G) communication system, the access management network element may be the access and mobility management function.

4. The SMF is mainly used for session management in a mobile network, such as session establishment, modification, and release. A specific function is, for example, allocating an internet protocol (internet protocol, IP) address to a terminal or selecting a user plane network element that provides a packet forwarding function. In the 5G communication system, the session management network element may be the session management function.

5. The UPF mainly processes a user packet, for example, forwarding, charging, or lawful interception. For example, the UPF may receive user plane data from the DN, and send the user plane data to the terminal device via the AN device. The UPF may alternatively receive user plane data from the terminal device via the AN device, and forward the user plane data to the DN.

The user plane network element may also be referred to as a protocol data unit (protocol data unit, PDU) session anchor (PDU session anchor, PSA). In the 5G communication system, the user plane network element may be the user plane function (user plane function, UPF), and is connected to the gNB and the data network.

6. The PCF includes a user subscription data management function, a policy control function, a charging policy control function, quality of service (quality of service, QoS) control, and the like. In the 5G communication system, a policy control network element may be the policy control function. It should be noted that in an actual network, the PCF may be further divided into a plurality of entities based on layers or functions, for example, a global PCF and a PCF in a slice, or a session management PCF (Session Management PCF, SM-PCF) and an access management PCF (Access Management PCF, AM-PCF).

7. The network slice selection function (network slice selection function, NSSF) is mainly used to select an appropriate network slice for a service of a terminal.

8. The UDM manages subscription information of a terminal, and is mainly used for subscription data management of the UE, including storage and management of a UE identity, access authorization of the UE, and the like.

9. The DN is mainly used for an operator network that provides a data service for the UE, for example, the internet (Internet), a third-party service network, and an IP multi-media service (IP multi-media service, IMS) network.

10. The UDR stores and retrieves user data via the UDM, stores and retrieves policy data via the PCF, and stores and retrieves structured data and application data (including data packet flow description information used for application detection and application request information of a plurality of UEs) that are of a network exposure function entity and that are used for exposure.

11. The NWDAF may collect data from network functions (network functions, NFs), for example, the policy control network element, the session management network element, the user plane network element, the access management network element, and an application function network element (through a network exposure function network element), and perform analysis and prediction.

As a service enables the 5G core network to form a flattened architecture. Control plane network function entities of a same network slice can discover each other through a control plane signaling bus and an NRF, obtain access address information of each other, and directly communicate with each other through the control plane signaling bus.

In the network architecture shown in FIG. 1, network elements may communicate with each other through interfaces. For example, the UE is connected to the gNB device according to a radio resource control (radio resource control, RRC) protocol, the UPF is connected to the gNB device and the DN by using a user plane, and other devices may be connected to each other by using a control plane.

It should be noted that, according to the schematic diagram of the network architecture shown in FIG. 1, the following should be further understood:
1. The network architecture shown in FIG. 1 may further include another network element, for example, a network element or a device such as an authentication server function (authentication server function, AUSF). This is not specifically limited in this application.
2. The network architecture shown in FIG. 1 is merely an example for description, and the network architecture to which embodiments of this application are applicable is not limited thereto. Any network architecture that can implement functions of the foregoing network elements is applicable to embodiments of this application.
3. Functions or network elements in the network architecture shown in FIG. 1 may be understood as network elements configured to implement different functions, for example, may be combined into a network slice according to a requirement. These network elements may be independent devices, may be integrated into a same device to implement different functions, may be a network element in a hardware device, may be a software function running on dedicated hardware, or may be an instantiated virtualization function on a platform (for example, a cloud platform). A specific form of the network element is not limited in this application.
4. Names of network elements or functions in the network architecture shown in FIG. 1 are defined only for ease of distinguishing between different functions, and should not constitute any limitation on this application. This application does not exclude a possibility of using other names in a 6G network and another future network. For example, in the 6G network, some or all of the foregoing network elements may still use terms in 5G, or may use other names.

For ease of understanding embodiments of this application, terms in this application are explained as follows:

### 1. Tracking area

A mobile network can be divided into a plurality of tracking areas. A plurality of cells with similar geographical locations and frequent terminal movements are grouped into a same tracking area (tracking area, TA). TAs can be differentiated by tracking area identities (tracking area identity, TAI). The TAI includes mobile country code (mobile country code, MCC), mobile network code (mobile network code, MNC), and tracking area code (tracking area code, TAC). After user equipment registers with a network, a network device for mobility management determines a registration area (registration area, RA) for the user equipment based on factors such as a wireless base station device connected to the network device and a tracking area included in a management range of the network device. The RA may include one or more TAs, and in a form, the RA is a list of one or more TAs. When the user equipment is in an idle state, a cell handover occurs and a core network device is not notified. After the user equipment arrives at a target cell, if the user equipment detects that a TA in which the target cell is located does not belong to an original RA, the user equipment initiates a registration update procedure, and notifies the network device for mobility management to leave the original registration area. Afterwards, the network device for mobility management accepts registration updating of the user equipment, and then allocates a new RA to the user equipment.

### 2. Network slice

Currently, there are a large quantity of devices and a greatly increasing quantity of cells in a mobile communication system. In addition, there may be a scenario in which different network slices are supported in different frequency bands. A network slice (network slice) is a logical network having a specific network feature, so that a 5G mobile communication system can meet a differentiated network requirement. A 5G physical network can be abstracted into a plurality of network slices. Each network slice forms an end-to-end logical network. The network slices are logically isolated from each other, and do not interfere with each other. Generally, network features of different network slices are different. For example, a network slice of an enhanced mobile broadband (enhanced mobile broadband, eMBB) type needs to support a high-bandwidth and low-latency service; a network slice of a massive machine type connection (massive machine type connection, mMTC) type supports massive access and a low bandwidth; and a slice of an ultra reliability and low latency connection (ultra reliability and low latency connection, uRLLC) type has high reliability and low latency. A service of each network slice is identified by single-network slice selection assistance information (Single-network slice selection assistance information, S-NSSAI). The 5G network selects a network slice for the service based on S-NSSAI carried in a registration request and a session establishment request of the terminal device, and transmits service data of a customer in the selected network slice. A customer may subscribe to a plurality of network slices from an operator. A terminal device may request to access the plurality of network slices at the same time. For example, an internet of vehicles terminal may simultaneously access three network slices: mMTC, eMBB, and uRLLC. The mMTC slice is used for applications such as routine vehicle fault detection and maintenance notification. The eMBB slice is used for instant message communication and online on-demand entertainment of a passenger. The uRLLC slice is used for internet of vehicles application of non-line-of- sight communication of automatic driving.

The terminal device may first select to camp on a cell, and then send a registration request message to the core network device via a wireless device (for example, the gNB). The registration request message carries information (Requested NSSAI) about a network slice that the terminal device requests to access. The requested NSSAI includes one or more pieces of S-NSSAI, and these pieces of S-NSSAI belong to a configured network slice (Configured NSSAI) configured for the terminal device in a current public land mobile network (Public land mobile network, PLMN). If the current PLMN is a home public land mobile network (Home public land mobile network, HPLMN), S-NSSAI in the configured NSSAI is a subscribed network slice (Subscribed S-NSSAI) for the terminal device. If the terminal device roams, only S-NSSAI (denoted as vS-NSSAI for convenience) of the VPLMN can be used in a visit public land mobile network (Visit public land mobile network, VPLMN). A communication service that can be provided by a network slice identified by the vS-NSSAI in the VPLMN is the same as or similar to a communication service provided by a network slice that is in the HPLMN and that is identified by the subscribed S-NSSAI of the terminal device in the HPLMN. In this case, the configured NSSAI of the terminal device in the VPLMN includes one or more pieces of vS-NSSAI, and pieces of subscribed S-NSSAI that are in the HPLMN and to which the pieces of vS-NSSAI are respectively mapped (Mapping).

For example, the NSSF or the AMF in the core network first determines that the requested NSSAI carried in the registration request message of the terminal device is the subscribed network slice for the terminal device or the vS-NSSAI mapped to the subscribed network slice. Then, the NSSF or the AMF in the core network may determine, based on a network slice that can be supported by the TA currently accessed by the terminal device, information (Allowed NSSAI) about a network slice that the terminal device is allowed to access. The allowed NSSAI includes one or more pieces of S-NSSAI. For example, in a startup process of a base station, the base station reports, to the AMF, a TAI of a tracking area to which a cell managed by the base station belongs and a list of S-NSSAI supported by the TA. In this way, the AMF can obtain network slices supported by TAs in a service range of the AMF. Further, each AMF sends, to the NSSF, network slices supported by TAs in a service range of the AMF, and the NSSF may obtain information about network slices supported by TAs in the entire PLMN and information about TAs connected to AMFs. When the terminal device sends the registration request message to the AMF by using a cell in a TA, the AMF or the NSSF may determine an intersection set of a set of S-NSSAI supported by the TA in which the UE is currently located and the requested NSSAI of the UE as the allowed NSSAI. Finally, the terminal device may successfully register with network slices included in the allowed NSSAI. Subsequently, the terminal device may establish protocol data unit sessions (Protocol data unit sessions, PDU sessions) by using these network slices, and transmit a service packet by using these network slices.

The NSSF or the AMF may further determine an RA for the terminal device. The RA is a TA list including the currently accessed TA. For example, if an adjacent TA of the currently accessed TA can also support network slices in the allowed NSSAI, the adjacent TA and the currently accessed TA are included in the TA list that supports the allowed NSSAI, and finally the TA list is determined as the RA with which the UE registers. When moving within a range of the RA, the terminal device may establish a PDU session by using a network slice in the allowed NSSAI at any time. When the terminal device moves out of the range of the RA or accesses a cell outside the range of the RA, the terminal device needs to re-register with the network.

### 3. Operating frequency band

The current protocol defines operating frequency bands used by the 5G network. N41, N78, and N79 are three most commonly used 5G operating frequency bands. The N41 is about 2.5 GHz, the N78 is about 3.5 GHz, and the N79 ranges from about 4.8 GHz to about 4.9 GHz. The N41 and N78 frequency bands have mature technologies, strong penetration capabilities, and wide coverage. They are mainstream 5G frequency bands for civil use. The N41 may cover a large area in a manner of macro base station deployment, and provide wireless access for an eMBB network slice and an mMTC network slice. The N78 may be superimposed in the coverage of the N41 frequency band, to provide wireless access for an eMBB network slice with a higher bandwidth in a hotspot area with a dense population. The N79 is suitable for special industrial scenarios and places. However, its penetration and coverage capabilities are inferior than those of the N41 and the N78. The N79 mainly provides wireless access for a uRLLC network slice in campuses and factories. In a TA, a wireless base station may provide a wireless network access service by using one or more cells (Cells) obtained through division. Each cell may operate in only one frequency band, and each cell may belong to only one TA. In addition, capabilities of network slices supported by all cells in a TA may be the same. In other words, although different cells in a TA may operate in different frequency bands, the cells should support one or more pieces of same S-NSSAI. Because a capability of a cell in a TA to support a network slice is limited, a terminal device usually can access a network slice that the terminal device expects to use only after registering with a network by using a cell in a specific TA.

In addition, due to some isolation requirements or factors such as some self-provided core network devices of a slice tenant enterprise, different AMFs in a same geographical area may further support different network slices. For example, an AMF of an operator supports a first network slice, and an AMF of an enterprise may support the first network slice to a third network slice. Because the terminal device can register with only one AMF, the terminal device usually can access a network slice that the terminal device expects to use only when the terminal device registers with a specific AMF.

However, the following situations may occur. FIG. 2 is a schematic diagram of network slice deployment. As shown in FIG. 2, network slices supported by a TA #1 are {network slice 1, network slice 2}, network slices supported by a TA #2 are {network slice 1, network slice 2, network slice 3 }, and network slices supported by a TA #3 are {network slice 2, network slice 3 }. If a terminal device accesses a network for registration by using the TA #1, and requested NSSAI of the terminal device is {network slice 1, network slice 2, network slice 3}, allowed NSSAI is {network slice 1, network slice 2}, and an RA is {TA #1, TA #2}. Although the TA #2 further supports the network slice 3, the UE cannot establish a PDU session by using the network slice 3 within a range of the RA. If the terminal device accesses the network for registration by using the TA #2, allowed NSSAI is {network slice 1, network slice 2, network slice 3}, and an RA is {TA #2}. In this case, a range of the RA is small, and the terminal device needs to frequently perform registration with the network when moving within a small range, resulting in heavy signaling load. It can be learned that a larger quantity of slices included in allowed NSSAI indicates a smaller corresponding RA. On the contrary, a smaller quantity of slices included in allowed NSSAI indicates a larger corresponding RA, and it is less likely that network registration needs to be frequently performed when the terminal device moves within a small range.

FIG. 3 is another schematic diagram of network slice deployment. As shown in FIG. 3, a TA#1 and a TA #2 may be TAs respectively covered by two access network devices that operate in different frequency bands. For example, a network slice 1 is a common service network slice provided by a public network, and a network slice 2 is a campus network slice with coverage of only a campus. The network slice 1 and the network slice 2 are separately managed by two different AMFs. To enable a terminal device in the campus to access a campus network slice at a campus geographical location, specific radio access technology/frequency selection priority (Radio access technology/frequency selection priority, RFSP) information is configured for the terminal device in the campus. The terminal device is associated with a group of frequencies at a wireless device based on the specific RFSP information, so that the terminal device performs cell selection or re-selection based on a re-selection priority of the specified group of frequencies, without depending on signal strength in each frequency band broadcast by a cell system, to ensure that the terminal device can camp on a specified frequency based on the RFSP information. Therefore, after the terminal device in the campus returns to the campus, the terminal device may preferentially camp on a cell of the TA #2, and another terminal device that is not in the campus still camps on a cell of the TA#1 at a same geographical location.

As shown in FIG. 3, if the terminal device in the campus has established a PDU session by using the network slice 1, and the terminal device expects to use the network slice 2 at a campus location at the same time, the terminal device needs to use {network slice 1, network slice 2} as requested NSSAI to re-initiate a registration request. In this case, a first AMF may indicate the cell of the TA #1 to carry a radio parameter corresponding to the RFSP information in a radio resource control release (Radio resource control release, RRC Release) message, so that the terminal device can select, based on these parameters, the cell of the TA #2 for camping. In this process, the terminal device first disconnects a radio resource control connection to the cell in the TA#1, enters an RRC idle state, and then re-camps on the cell in the TA #2. During this period, the PDU session that has been established by using the network slice 1 is deactivated or interrupted. Therefore, when the terminal device expects to access a new network slice through re-registration, a currently accessed TA or a currently accessed AMF may need to be changed. In this case, a PDU session that has been established by the terminal device is affected, and a service of the terminal device is affected.

In view of this, this application provides a slice determining method and an apparatus thereof, to improve a solution in which a terminal device accesses a network slice in a process in which the terminal device registers with a network, and improve user experience.

The foregoing briefly describes terms used in this application, and details are not described in the following embodiments. The following describes in detail a slice-based communication method provided in embodiments of this application with reference to the accompanying drawings. Embodiments provided in this application may be applied to the network architecture shown in FIG. 1. This is not limited.

For a better understanding of embodiments, the following descriptions are provided herein:
1. In this application, an AMF network element may be briefly referred to as an AMF, an NSSF network element may be briefly referred to as an NSSF, a UDM network element may be briefly referred to as a UDM, a PCF network element may be briefly referred to as a PCF, an NWDAF network element may be briefly referred to as an NWDAF, and an SMF network element may be briefly referred to as an SMF. In other words, the AMF described in this application may be replaced with a mobility and access management function network element, the NSSF may be replaced with a network slice selection function network element, the UDM may be replaced with a unified data management network element, the NWDAF may be replaced with a network data analytics function network element, and the SMF may be replaced with a session management function network element.
2. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

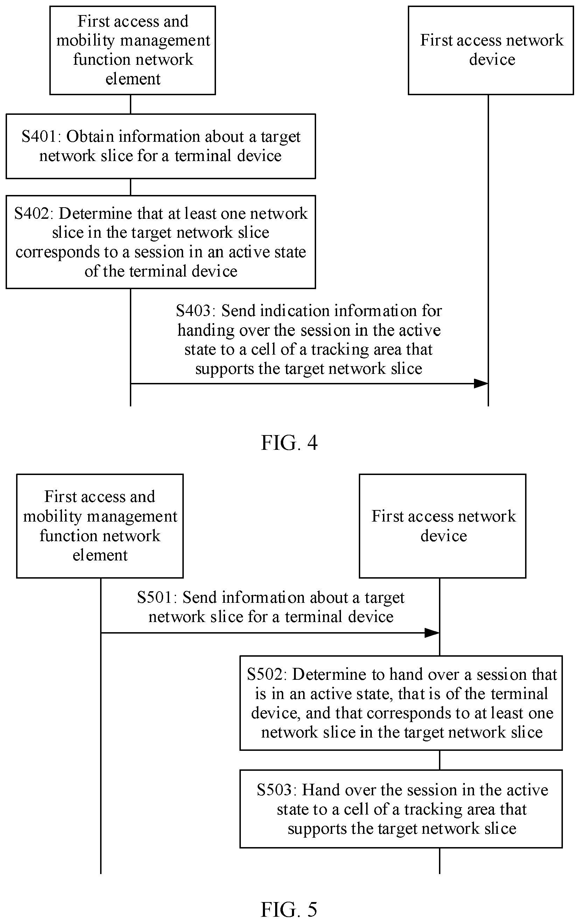

FIG. 4 is a schematic diagram of a slice-based communication method 400 according to an embodiment of this application. A scenario corresponding to FIG. 4 is as follows: A target network slice for a terminal device includes at least one network slice corresponding to (or associated with) a session in an active state of the terminal device, and a tracking area before the terminal device is handed over does not fully support a requested network slice that is of the terminal device and that is carried in a registration request message. The method 400 includes the following steps.

S401: A first access and mobility management function network element obtains information about the target network slice for the terminal device.

The target network slice includes a network slice that is in the requested network slice for the terminal device and that is not supported by a current tracking area of the terminal device, but may be supported by another tracking area (for example, a tracking area of another frequency band that overlaps the current tracking area of the terminal device). For example, the information about the target network slice may be target NSSAI.

For example, the information about the target network slice may be determined by the first access and mobility management function network element itself, or may be received from a network slice selection function network element.

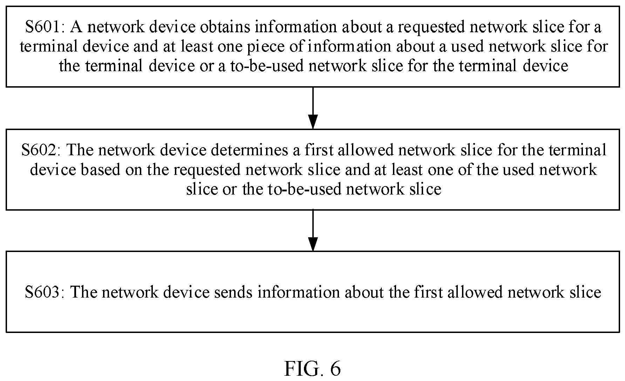

In a possible implementation, the first access and mobility management function network element may determine the target network slice based on a used network slice in a first allowed network slice for the terminal device. The used network slice may be a network slice in which the terminal device has established a session. The first allowed network slice is an allowed network slice stored by the first access and mobility management function network element in a context of the terminal device. The first access and mobility management function network element adds, to the target network slice, a network slice in which a session has been established in the first allowed network slice, and in particular, a network slice corresponding to a session with an active user plane. The first access and mobility management function network element may determine the target network slice based on a to-be-used network slice for the terminal device. The to-be-used network slice is a network slice that is newly requested by the terminal device to access in the requested network slice and that is other than the first allowed network slice. The first access and mobility management function network element adds the to-be-used network slice to the target network slice. This is to be further described with reference to FIG. 6 below.

S402: The first access and mobility management function network element determines that at least one network slice in the target network slice corresponds to the session in the active state of the terminal device.

The session in the active state may be a session with the user plane in the active state.

The at least one network slice in the target network slice corresponds to the session in the active state of the terminal device. It does not specifically indicate that all network slices in the target network slice correspond to the session in the active state of the terminal device. Alternatively, it may only indicate that one network slice in the target network slice corresponds to the session in the active state of the terminal device.

In a possible implementation, the first access and mobility management function network element may obtain, from the context of the terminal device, a single-network slice selection assistance information attribute of the session established by the terminal device in a current serving network, that is, a network slice corresponding to the established session.

In another possible implementation, the first access and mobility management function network element may obtain session status (for example, PDU session status) information from a registration request of the terminal device, and determine, based on the session status information, a status (for example, the status of the session may include the active state, an inactive state, the active state, or a released state) of the established session of the terminal device.

In yet another possible implementation, the first access and mobility management function network element may determine, based on the session in the active state and the target network slice, that the at least one network slice in the target network slice corresponds to the session in the active state.

Specifically, when the at least one network slice corresponding to the session in the active state belongs to the target network slice, it may be determined, based on a network slice corresponding to the session in the active state and a network slice included in the target network slice, that the at least one network slice in the target network slice corresponds to the session in the active state.

For example, the allowed network slices are {network slice #1, network slice #2, network slice #3}, the network slice corresponding to the session in the active state is {network slice #3}, and the target network slices are {network slice #3, network slice #4}. Because the network slice #3 in the network slice corresponding to the session in the active state belongs to the target network slice, it may be determined that the at least one network slice in the target network slice corresponds to the session in the active state.

It should be understood that, because the network slice for the session in the active state in the target network slice is from the allowed network slice, determining that the at least one network slice in the target network slice corresponds to the session in the active state is equivalent to determining that at least one network slice in the allowed network slice corresponds to the session in the active state. In another implementation, when the current tracking area of the terminal device does not fully support the requested network slice for the terminal device, and the first access and mobility management function network element does not obtain the target network slice for the terminal device, the first access and mobility management function network element may determine, in any one of the foregoing possible implementations by using the allowed network slice (allowed NSSAI), that the at least one network slice in the allowed network slice corresponds to the session in the active state. Obtaining the target network slice may be performed during or after determining that the at least one network slice in the allowed network slice corresponds to the session in the active state.

S403: The first access and mobility management function network element sends, to a first access network device, indication information for handing over the session in the active state to a cell of a tracking area that supports the target network slice. Correspondingly, the first access network device receives, from the first access and mobility management function network element, the indication information for handing over the session in the active state to the cell of the tracking area that supports the target network slice.

In a possible implementation, the indication information is the information about the target network slice. In this case, the information about the target network slice is used to implicitly indicate to hand over the session in the active state to the cell of the tracking area that supports the target network slice.

In another possible implementation, the indication information is independent indication information. An indication bit in the indication information or the like may be used for indication. Further, the first access and mobility management function network element sends the information about the target network slice to the first access network device. For example, the indication information may be a handover indication (handover indication).

In other words, regardless of an implementation, the first access and mobility management function network element sends the information about the target network slice to the first access network device. The first access and mobility management function network element may use the information about the target network slice as implicit indication information, or use additionally carried explicit indication information (for example, a handover indication), so that the first access network device that receives the information may learn that a handover needs to be initiated, to hand over the session in the active state to the cell of the tracking area that supports the target network slice.

Therefore, when there is one network slice in the target network slice, and a user plane of any PDU session related to the network slice is in an active state, the first access and mobility management function network element may send the information about the target network slice and the handover indication to the first access network device.

For example, the first access and mobility management function network element may send an N2 interface message to the first access network device. The N2 interface message carries the indication information for handing over the session in the active state to the cell of the tracking area that supports the target network slice and the information about the target network slice.

In addition, the N2 message may further carry a registration response message or a terminal device configuration update message sent by the first access and mobility management function network element to the terminal device via the first access network device. The registration response message indicates that the terminal device successfully registers with the first access and mobility management function network element. The terminal device configuration update message is used to provide the terminal with at least one of a latest allowed network slice and an RA.

It should be understood that, in this solution, the indication information does not indicate the specific session to be handed over, and only indicates that session handover needs to be performed. In other words, when a session needs to be handed over, the indication information is sent. The specific session to be handed over is determined by the first access network device after the first access network device receives the indication information (for a detailed determining manner, refer to the following related description in S502). The indication information may further indicate that when the first access network device cannot find a target cell that meets a handover condition, the first access network device still retains the terminal device in the current TA, and does not control the terminal device to reselect, in a redirection manner, a cell that supports the target network slice, to ensure that the session in the active state is not deactivated and interrupted.

Based on this solution, after determining the session that is in the active state, that is of the terminal device, and that corresponds to the at least one network slice in the target network slice, the first access and mobility management function network element may send, to the first access network device, the indication information for handing over the session in the active state to the cell of the tracking area that supports the target network slice. Further, in the conventional technology (for example, in the manner described in FIG. 2 or FIG. 3), in a process of redirecting a session of a terminal device in an active state, the terminal device needs to first disconnect an RRC connection to a cell in a tracking area before redirection, enter an RRC idle state, and then re-campus on a cell in a tracking area after redirection, so that the established session of the terminal device is active or interrupted. In this solution, the RRC connection does not need to be released. Instead, after determining that the at least one network slice in the target network slice corresponds to the session in the active state of the terminal device, the first access and mobility management function network element sends, to the first access network device, indication information for handing over the session in the active state to the cell of the tracking area that supports the target network slice, to complete session handover. Therefore, this solution can improve service stability of the terminal device, prevent the session in the active state of the terminal device from being interrupted when the terminal device registers with the network slice after accessing the cell that supports the target network slice for the terminal device, and improve user experience.

Optionally, to determine a network slice used by the terminal device to subsequently establish a session, the method 400 may further include any one of the following manners.

In a possible implementation, the first access and mobility management function network element may store the target network slice to the context of the terminal device. After the session in the active state is handed over, the first access and mobility management function network element receives the registration request message of the terminal device, and determines a second allowed network slice for the terminal device based on the requested network slice carried in the registration request message and the target network slice stored in the context of the terminal device.

Specifically, after the session in the active state is handed over, the network slice that belongs to both the requested network slice and the target network slice may be selected to constitute the second allowed network slice.

For example, if the requested network slices carried in the registration request message are {network slice #1, network slice #2, network slice #3}, network slices supported by a new current TA that the terminal enters after handover are {network slice #1, network slice #2, network slice #3}, and the target network slices stored in the context of the terminal device are {network slice #2, network slice #3}, the second allowed network slices are {network slice #2, network slice #3}. The network slice #1 that is in the requested network slice and that is also supported by the new TA in which the UE is currently located is not added to the second allowed network slice. In other words, even if the current TA supports the network slice #1, because the target network slice stored in the context of the terminal device does not include the network slice #1, the second allowed network slice does not include the network slice #1.

The second allowed network slice is used by the terminal device to subsequently establish a session.

In another possible implementation, the first access and mobility management function network element stores the target network slice in the context of the terminal device. Then, the first access and mobility management function network element sends information about the context to a second access and mobility management function network element.

The target network slice in the information about the context is used by the second access and mobility management function network element to determine the second allowed network slice after the session in the active state of the terminal device is handed over and the registration request is initiated.

Optionally, the method 400 further includes: The first access and mobility management function network element sends RFSP information corresponding to the target network slice to the first access network device. Correspondingly, the first access network device receives the RFSP information corresponding to the target network slice from the first access and mobility management function network element. For example, the RFSP information is an RFSP index (index).

The RFSP information is used to determine a radio measurement instruction. The radio measurement instruction is used by the terminal device to discover, before the session in the active state is handed over, the cell of the tracking area that supports the target network slice.

In a possible implementation, the RFSP information is determined by the first access and mobility management function network element according to a local configuration policy.

In another possible implementation, the RFSP information is obtained by the first access and mobility management function network element through requesting from a policy control network element.

Optionally, in addition to determining the target network slice, the first access and mobility management function network element may further determine the allowed network slice, determine a corresponding registration area based on the allowed network slice, and send at least one piece of information about the target network slice, the allowed network slice, or the registration area corresponding to the allowed network slice to the terminal device.

For example, the first access and mobility management function network element may send the registration response message to the terminal device. The registration response message carries the at least one piece of information about the target network slice, the allowed network slice, or the registration area corresponding to the allowed network slice.

FIG. 5 is a schematic diagram of a slice-based communication method 500 according to an embodiment of this application. The method 500 includes the following steps.

S501: A first access network device receives information about a target network slice for a terminal device from a first access and mobility management function network element. Correspondingly, the first access and mobility management function network element sends the information about the target network slice for the terminal device to the first access network device.

For example, after obtaining the target network slice, the first access and mobility management function network element may send the information about the target network slice to the first access network device.

S502: The first access network device determines to hand over a session that is in an active state, that is of the terminal device, and that corresponds to at least one network slice in the target network slice.

First, the first access network device may receive, from the first access and mobility management function network element, indication information for handing over the session in the active state to a cell of a tracking area that supports the target network slice, and determine, based on the indication information, to hand over the session that is in the active state and that corresponds to the at least one network slice in the target network slice.

The indication information may be the information about the target network slice. In this case, the information about the target network slice may be used as a trigger condition, to trigger the first access network device that receives the information about the target network slice to determine, based on a context of the terminal device maintained by the first access network device itself, whether there is a session currently in an active state. If yes, the first access network device may determine to hand over the session that is in the active state, that is of the terminal device, and that corresponds to the at least one network slice in the target network slice. Therefore, it may be understood that the information about the target network slice implicitly indicates to hand over the session in the active state to the cell of the tracking area that supports the target network slice.

In addition, the indication information may be independent indication information. An indication bit in the indication information or the like may be used for indication. For example, the indication information may be a handover indication (handover indication). Therefore, the first access network device may directly determine, based on the indication information, to hand over the session that is in the active state, that is of the terminal device, and that corresponds to the at least one network slice in the target network slice.

For example, the first access and mobility management function network element may send an N2 interface message to the first access network device. The N2 interface message carries the indication information for handing over the session in the active state to the cell of the tracking area that supports the target network slice and the information about the target network slice.

In addition, the N2 message may further carry a registration response message or a terminal device configuration update message sent by the first access and mobility management function network element to the terminal device via the first access network device. The registration response message indicates that the terminal device successfully registers with the first access and mobility management function network element. The terminal device configuration update message indicates to provide the terminal with at least one of a latest allowed network slice and an RA.

It should be understood that, in this solution, the indication information does not indicate the specific session to be handed over, and only indicates that session handover needs to be performed. In other words, when the session needs to be handed over, the indication information is sent.

Therefore, in the foregoing manner, the first access network device may determine to initiate a handover procedure.

In addition, the first access network device may obtain, based on the context of the terminal device maintained by the first access network device itself, a network slice corresponding to the session in the active state of the terminal device, and determine, based on the at least one network slice in the target network slice corresponding to the session in the active state, to hand over the session in the active state, that is, determine the session that needs to be handed over. If the first access network device cannot find a target cell that meets a handover condition, the first access network device still retains the terminal device in the current TA, and does not control the terminal device to reselect, in a redirection manner, a cell that supports the target network slice, to ensure that the session in the active state is not deactivated and interrupted.

Specifically, the first access network device may determine that the at least one network slice in the target network slice belongs to the network slice corresponding to the session in the active state of the terminal device, and determine to hand over the session in the active state.

For example, if the target network slices are {network slice #1, network slice #2, network slice #3}, and the network slice corresponding to the session in the active state of the terminal device is {network slice #2}, it may be determined that a session corresponding to the network slice #2 is the session that is in the active state and that is to be handed over.

Then, the first access network device may send a radio measurement instruction of the terminal device to the terminal device (for example, send the radio measurement instruction of the terminal device to the terminal device based on a radio resource management reconfiguration message). The terminal device sends a radio measurement report to the first access network device. If the radio measurement report indicates that signal strength of the cell of the tracking area that supports the target network slice reaches a preset threshold, the first access network device determines to start handover.

Optionally, to determine the radio measurement instruction, the method 500 further includes: The first access network device determines the radio measurement instruction of the terminal device.

The radio measurement instruction is used to discover, before the session in the active state is handed over, the cell of the tracking area that supports the target network slice.

In a possible implementation, the first access network device determines the radio measurement instruction based on the information about the target network slice.

In another possible implementation, the first access network device receives, from the first access and mobility management function network element, RFSP information corresponding to the target network slice. Then, the first access network device determines the radio measurement instruction based on the RFSP information.

For example, the registration response message sent by the first access and mobility management function network element to the first access network device may carry the RFSP information corresponding to the target network slice.

S503: The first access network device hands over the session in the active state to a cell of a tracking area that supports the target network slice.

Specifically, the first access network device may send a handover request to the first access and mobility management function network element. The handover request carries information about a session to be handed over and information about a target cell for handover. The information about the session to be handed over is information about the session in the active state, and the information about the target cell for handover is the cell of the tracking area that supports the target network slice.

After receiving the handover request, the first access and mobility management function network element determines that a second access network device that manages the cell of the tracking area that supports the target network slice is connected to a second access and mobility management function network element, and sends a request message for creating the context of the terminal device to the second access and mobility management function network element. The context of the terminal device includes the information about the target network slice. Then, the second access and mobility management function network element sends, to the first access and mobility management function network element, a response message indicating that the context of the terminal device is successfully created.

Therefore, the first access network device, the second access network device, the first access and mobility management function network element, and the second access and mobility management function network element jointly hand over a context of the session in the active state from the first access network device and the first access and mobility management function network element to the second access network device and the second access and mobility management function network element, so that the session in the active state is handed over to the cell of the tracking area that supports the target network slice.

A service packet of the terminal device can still be normally transmitted without interruption on a user plane path of the session in the active state in a handover process of handover from the first access network device to the second access network device.

Based on this solution, after receiving the information about the target network slice for the terminal device from the first access and mobility management function network element, the first access network device determines to hand over the session that is in the active state, that is of the terminal device, and that corresponds to the at least one network slice in the target network slice, and hands over the session in the active state of the terminal device to the cell of the tracking area that supports the target network slice. Further, in the conventional technology (for example, in the manner described in FIG. 2 or FIG. 3), in a process of redirecting a session of a terminal device in an active state, the terminal device needs to first disconnect an RRC connection to a cell in a tracking area before redirection, enter an RRC idle state, and then re-campus on a cell in a tracking area after redirection, so that the established session of the terminal device is active or interrupted. In this solution, the RRC connection does not need to be released. Instead, after determining that the at least one network slice in the target network slice corresponds to the session in the active state of the terminal device, the first access network device hands over the session in the active state of the terminal device to the cell of the tracking area that supports the target network slice. Therefore, this solution can improve service stability of the terminal device, prevent the session in the active state of the terminal device from being interrupted when the terminal device registers with the network slice after accessing the cell that supports the target network slice for the terminal device, and improve user experience.

FIG. 6 is a schematic diagram of a slice-based communication method 600 according to an embodiment of this application. The method 600 includes the following steps.

S601: A network device obtains information about a requested network slice for a terminal device and at least one piece of information about a used network slice for the terminal device or a to-be-used network slice for the terminal device.

The network device may include a network slice selection function network element or an access and mobility management function network element.

When the network device includes the access and mobility management function network element, that the network device obtains the at least one piece of information about the used network slice or the to-be-used network slice may include at least one of the following manners.

In a possible manner, the network device may determine the information about the used network slice based on session status information of the terminal device. The session status information may be carried in a registration request message sent by the terminal device to the access and mobility management function network element.

Specifically, the network device may determine, based on the session status information, an established session, that is, determine that the terminal device has established the session. For example, when the session status information indicates active (active), it indicates that the terminal device has established the session. Then, the network device may determine, based on a context of the terminal device, a network slice corresponding to the established session, that is, the used network slice.

In another possible manner, the network device includes the access and mobility management function network element. The network device may determine the information about the to-be-used network slice based on the requested network slice (requested NSSAI) for the terminal device and a fourth allowed network slice in the context of the terminal device stored in the network device. Alternatively, the network device may request information about the fourth allowed network slice from the network slice selection function network element, and determine the information about the to-be-used network slice based on the requested network slice for the terminal device and the fourth allowed network slice. The requested network slice may be carried in the registration request message sent by the terminal device to the access and mobility management function network element.

Specifically, the network device may select, from the requested network slices, a network slice that does not belong to the fourth allowed network slice, to constitute the to-be-used network slice.

For example, if the requested network slices are {network slice #1, network slice #2, network slice #3}, and the fourth allowed network slices are {network slice #2, network slice #3}, the network device may determine that the to-be-used network slice is {network slice #1}.

In still another possible manner, the network device may receive communication analysis result information of the terminal device from a network data analytics function network element, and determine the information about the to-be-used network slice based on the communication analysis result information.

In yet another possible manner, when the network device includes the network slice selection function network element, the network device may receive, from the access and mobility management function network element, the at least one piece of information about the used network slice for the terminal device or the to-be-used network slice for the terminal device.

In addition, when the network device includes the network slice selection function network element, after the network device receives a network slice selection request from the access and mobility management function network element (hereinafter referred to as a first access and mobility management function network element), if the network device determines that a tracking area in which the terminal device is currently located supports the requested network slice for the terminal device, but the first access and mobility management function network element does not support the requested network slice for the terminal device, the network device may determine a new access and mobility management function network element (hereinafter referred to as a second access and mobility management function network element) that is connected to the tracking area in which the terminal device is currently located and that supports the requested network slice for the terminal device, and send information about the second access and mobility management function network element to the first access and mobility management function network element. Then, the first access and mobility management function network element forwards the registration request message of the terminal device to the second access and mobility management function network element for processing. For a description of the registration request message, refer to the description of the registration request message. Finally, if the network device determines that the tracking area in which the terminal device is currently located does not support the requested network slice for the terminal device, the network device may determine the target network slice for the terminal device, and in this case, does not return the information about the second access and mobility management function network element to the first access and mobility management function network element.

S602: The network device determines a first allowed network slice for the terminal device based on the requested network slice and at least one of the used network slice or the to-be-used network slice.

In a first possible implementation, the network device may determine the first allowed network slice based on the requested network slice carried in the registration request message of the terminal device and the at least one of the used network slice for the terminal device or the to-be-used network slice for the terminal device.

Specifically, the network device may select a network slice that is both in the requested network slice and that belongs to the used network slice or the to-be-used network slice, to constitute the first allowed network slice.

For example, if the TA in which the terminal device is currently located supports {network slice #1, network slice #2, network slice #3 }, the network device may determine the first allowed network slice (for example, {network slice #2, network slice #3}) for the terminal device based on the used network slice (for example, {network slice #3}), the to-be-used network slice (for example, {network slice #2}), and the requested network slice (for example, {network slice #1, network slice #2, network slice #3}) for the terminal device. Although the TA in which the terminal device is currently located also supports the network slice #1 in the requested network slice, because the network slice #1 belongs to neither the used network slice nor the to-be-used network slice, the network slice #1 is not included in the first allowed network slice. In other words, if a network slice requested by the terminal device does not belong to the used network slice for the terminal device or the to-be-used network slice for the terminal device, even if the TA in which the terminal device is currently located supports the network slice, the network device excludes the network slice when determining the first allowed network slice. Alternatively, it may be understood that the network slice is filtered. Therefore, each network slice in the finally determined first allowed network slice belongs to the used network slice for the terminal device or the to-be-used network slice for the terminal device. Compared with an allowed network slice determined in the conventional technology, an allowed network slice determined in this way includes a smaller quantity of network slices.

In a second possible implementation, if the terminal device does not provide the requested network slice (for example, the terminal device performs network registration with the network device (for example, the access and mobility management function network element) for the first time), the network device may determine the first allowed network slice based on the requested network slice carried in the registration request message of the terminal device, the used network slice for the terminal device, and the network slice supported by the current tracking area of the terminal device.

Specifically, the network device may select the network slice that belongs to at least one of the used network slice or the to-be-used network slice and supported by the current tracking area of the terminal device, to constitute the first allowed network slice.

For example, the network device may determine the first allowed network slice (for example, {network slice #3}) for the terminal device based on the used network slice (for example, {network slice #3 }) for the terminal device, the to-be-used network slice (for example, {network slice #2}) for the terminal device, and the network slices that are supported by the tracking area in which the terminal device is currently located and that are {network slice #3, network slice #4}.

In a third possible implementation, if the terminal device has completed network registration with the network device, and at least one network slice in the requested network slice carried in a network registration update request sent by the terminal device to the network device is not included in a previously determined allowed network slice (stored in the context of the terminal device), the at least network slice that is in the requested network slice, that is not included in the previously determined allowed network slice (stored in the context of the terminal device), and that is used as the network slice (for example, if the tracking area before handover of the terminal device only supports the requested network slice included in the previously determined allowed network slice, and the tracking area after handover of the terminal device supports the previously determined allowed network slice, the at least network slice that is in the requested network slice and that is not included in the previously determined allowed network slice may be used as the network slice that the terminal device expects to use) that the terminal device expects to use, that is, the to-be-used network slice, is added to the previously determined allowed network slice (stored in the context of the terminal device), to obtain the first allowed network slice.

The third possible implementation may be combined with the first two possible implementations.

For example, the allowed network slice received by the terminal device after the terminal device registers with the network last time includes {network slice #1, network slice #3 }. The TA with which the terminal device registers last time does not support a network slice 4. Therefore, the network slice 4 is not included in the allowed network slice. Then, the terminal device initiates a registration update procedure in the new TA, and the requested network slices carried in a registration update message are {network slice #3, network slice #4}. Because the new TA supports the network slice 3 and the network slice 4, the network device may determine the to-be-used network slice (for example, {network slice #4}) based on the requested network slice carried in the current network registration update message, the allowed network slice received after the terminal device registers with the network last time, and the network slice supported by the tracking area in which the terminal device is currently located, then add the to-be-used network slice to the previously determined allowed network slice, including {network slice #1, network slice #3}, and determine a latest first allowed network slice (for example, {network slice #1, network slice #3, network slice #4}) for the terminal device.

In a fourth possible implementation, if a session subsequently established by the terminal device by using a network slice is released, and after a period of time, the terminal device still initiates a registration request by using the network slice included in the requested network slice, the network device may determine that the network slice in the previously determined allowed network slice (stored in the context of the terminal device) has no ongoing session. If release time of the released session exceeds a preset threshold, the network device deletes or removes the network slice from the previously determined allowed network slice (stored in the context of the terminal device), to obtain the first allowed network slice.

The third possible implementation may be combined with the first three possible implementations.

For example, the network device may determine the first allowed network slice (for example, {network slice #4}) for the terminal device based on the network slice (for example, {network slice #3}) corresponding to the released session, the network slices {network slice #3, network slice #4} requested by the terminal device, and the previously determined allowed network slice (for example, {network slice #3, network slice #4}). Although the TA in which the terminal device is currently located also supports the network slice #3 in the requested network slice, because the network slice #3 belongs to neither the used network slice nor the to-be-used network slice, the network slice #3 is not included in the first allowed network slice.

In addition, the network device may obtain the first allowed network slice via the network slice selection function network element.

Further, the network device may further determine, based on the first allowed network slice and the tracking area in which the terminal device is currently located, a registration area corresponding to the first allowed network slice. The registration area includes the tracking area in which the terminal device is currently located and another tracking area that is adjacent to or close to the tracking area and that supports the first allowed network slice.

S603: The network device sends information about the first allowed network slice.

When the network device includes the network slice selection function network element, the network device may send the information about the first allowed network slice to the access and mobility management function network element.

When the network device includes the access and mobility management function network element, the network device may send the information about the first allowed network slice to the terminal device.

For example, the network device may send a registration response message or a terminal device configuration update message to the terminal device. The registration response message or the terminal device configuration update message carries at least one piece of information of the first allowed network slice or the registration area corresponding to the first allowed network slice.

It should be understood that a method for determining the first allowed network slice in this solution is also applicable to a scenario in which the first allowed network slice is determined in another embodiment of this application.

Optionally, the method 600 further includes: The network device obtains information about the network slice supported by the tracking area in which the terminal device is located.

When the network device includes the network slice selection function network element, the network device may obtain, via the access and mobility management function network element, the information about the network slice supported by the tracking area in which the terminal device is located.

When the network device includes the access and mobility management function network element, the network device may obtain, via the access network device, the information about the network slice supported by the tracking area in which the terminal device is located.

Further, when the tracking area does not support at least one network slice in the to-be-used network slice, the method 600 further includes: The network device determines the target network slice for the terminal device based on the requested network slice and the at least one of the used network slice or the to-be-used network slice. This manner is also applicable to a scenario in which the target network slice is determined in another embodiment of this application. In other words, in step 401 in FIG. 4, the access and mobility management network element may also obtain the information about the target network slice in the following manner.

In a possible implementation, the network device may select a network slice that is in the requested network slice and that belongs to at least one of the used network slice or the to-be-used network slice, to constitute the target network slice.

The target network slice includes a network slice that is in the requested network slice for the terminal device and that is not supported by a current tracking area of the terminal device, but may be supported by another tracking area (for example, a tracking area of another frequency band that overlaps the current tracking area of the terminal device). For example, the information about the target network slice may be target NSSAI.

The target network slice includes the used network slice in the allowed network slice that is stored in a context of the terminal device, and the to-be-used network slice. The used network slice may be a network slice corresponding to a session that has been established by the terminal device, and the to-be-used network slice may be a network slice for a session that the terminal device expects to establish. In addition, the session that the terminal device expects to establish may be a session that the terminal device expects to establish but has not established, or may be a session that has been released but the terminal device expects to establish (for example, a session in a service continuity mode 2 or a mode 3).

In an implementation, if the terminal device already registers with the network device, the network device may obtain a previously stored allowed network slice for the terminal device. If one or more network slices in the requested network slice carried in a registration request message initiated by the terminal device do not belong to the allowed network slice, the one or more network slices are to-be-used network slices. The network device may select the network slice that is in the requested network slice and that belongs to the at least one of the used network slice or the to-be-used network slice, to constitute the target network slice.

Further, the target network slice may further include at least one network slice that is not supported by the current tracking area of the terminal device.

For example, it is assumed that the network slices supported by the TA in which the terminal device is currently located are {network slice #2, network slice #3, network slice #4}, the allowed network slices that are for the terminal device and that are previously stored by the network device are {network slice #3, network slice #4}, and the requested network slices are {network slice #1, network slice #2, network slice #4}. If the network device determines that the to-be-used network slices are {network slice #1, network slice #2}, and the used network slice is {network slice #3 }, the target network slices are {network slice #1, network slice #2, network slice #3}.

In another possible implementation, the network device may determine the target network slice based on the used network slice in the allowed network slice that is stored in the context of the terminal device.

For example, the network device may select, as the target network slice, a network slice that is in the allowed network slice stored in the context of the terminal device and that belongs to the used network slice for the terminal device, or the network device may remove the network slice that is in the allowed network slice stored in the context of the terminal device and that does not belong to the used network slice for the terminal device, to determine the target network slice.

Further, the network device may determine the target network slice based on the used network slice in the allowed network slice stored in the context of the terminal device and the to-be-used network slice for the terminal device.

For example, the network slices supported by the TA in which the terminal device is currently located are {network slice #2, network slice #3, network slice #4}, the allowed network slices that are for the terminal device and that are previously stored by the network device are {network slice #3, network slice #4}, and the requested network slices are {network slice #1, network slice #2, network slice #3, network slice #4}. If the network device determines that the to-be-used network slices are {network slice #1, network slice #2}, and the used network slice is {network slice #3}, the target network slices are {network slice #1, network slice #2, network slice #3}. The network device removes the network slice that is in the allowed network slices stored in the context of the terminal device and that does not belong to the used network slice for the terminal device and the network slice (for example, {network slice #4}) that does not belong to the to-be-used network slice, to constitute the target network slice.

In still another possible implementation, the network device may further receive the information about the target network slice from the network slice selection function network element.

It should be understood that, in this solution, the terminal device determines the target network slice in the current registration area. If the terminal device changes the tracking area, and a changed tracking area fully supports the target network slice, the target network slice is the same as the (first) allowed network slice for the terminal device after the tracking area is changed. Therefore, an implementation of determining the target network slice may be similar to the foregoing manner of determining the allowed network slice. Details are not described herein again.

Optionally, when the network device includes the access and mobility management function network element, the method 600 further includes: The network device receives a second allowed network slice for the terminal device from a second network slice selection function network element. Then, the network device selects, from the second allowed network slice, a network slice that belongs to the at least one of the used network slice or the to-be-used network slice, to constitute a third allowed network slice for the terminal device.

The second allowed network slice may be determined by the second network slice selection function network element in the conventional technology, that is, determined by the second network slice selection function network element by using the requested network slice carried in the registration request message of the terminal device and the network slice supported by the registration area in which the terminal device is located.

Optionally, after determining the third allowed network slice, the network device may send the information about the third allowed network slice to the terminal device.

For example, if the second allowed network slices are {network slice #1, network slice #2, network slice #3, network slice #4}, the used network slices are {network slice #2, network slice #3}, and the to-be-used network slice is {network slice #1}, the third allowed network slices are {network slice #1, network slice #2, network slice #3}.

It should be understood that, in embodiments of this application, at least one of the used network slice for the terminal device or the to-be-used network slice for the terminal device indicates a case in which only the used network slice for the terminal device is included, and a case in which both the used network slice for the terminal device and the to-be-used network slice for the terminal device are included.

Based on this solution, after obtaining the information about the requested network slice for the terminal device and the at least one piece of the information about the used network slice for the terminal device or the to-be-used network slice for the terminal device, the network device may determine the first allowed network slice or the third allowed network slice for the terminal device based on the information, and send the information about the first allowed network slice or the information about the third allowed network slice. Because a quantity of network slices included in the first allowed network slice or the third allowed network slice is reduced through processing in this embodiment, an appropriate allowed network slice can be determined based on a communication requirement of the terminal device, to maximize a range of a registration area corresponding to the allowed network slice, and reduce a signaling load in a movement process of the terminal device.

Further, the method 600 may further include: The network device obtains information about a first rejected network slice for the terminal device. Then, the network device deletes a network slice that is in the first rejected network slice and that is supported by any tracking area in a registration area of the terminal device, to obtain a second rejected network slice for the terminal device. The registration area is determined based on the third allowed network slice, and the second rejected network slice indicates that in the current registration area, the terminal device is rejected to request to access a network slice in the second rejected network slice. Alternatively, in another implementation, the network device may directly determine information about the second rejected network slice without first obtaining the information about the first rejected network slice for the terminal device. The information about the second rejected network slice indicates that in the current registration area, the terminal device is rejected to request to access the network slice in the second rejected network slice, and the information about the second rejected network slice excludes the network slice supported by any tracking area in the registration area of the terminal device.

For example, if the first rejected network slices are {network slice #1, network slice #2, network slice #3, network slice #4}, and the network slices supported by the tracking area in the registration area are {network slice #2, network slice #3}, the second rejected network slices are {network slice #1, network slice #4}.

It should be noted that this manner of determining the rejected network slice does not impose any limitation on determining the third allowed network slice in this manner. For example, an allowed network slice may be determined in a manner in the conventional technology or in another manner, and a corresponding registration area may be determined. When the rejected network slice is determined, the network slice supported by any tracking area in the registration area is considered to be removed from the rejected network slice, to reduce a quantity of network slices included in the rejected network slice.

Further, the network device may send the information about the second rejected network slice to the terminal device.

For example, the network device may send the registration response message or a terminal device configuration update message to the terminal device. The registration response message indicates that the terminal device successfully registers, and may further carry the information about the second rejected network slice. The terminal device configuration update message indicates to provide the terminal with at least one of a latest allowed network slice and an RA, and may further carry the information about the second rejected network slice.

Therefore, the first rejected network slice is further processed to obtain the second rejected network slice, so that fewer network slices are rejected for the terminal device, and a range of network slices that can be used by the terminal device is maximized, thereby expanding a range of the corresponding registration area and reducing the signaling load in the movement process of the terminal.

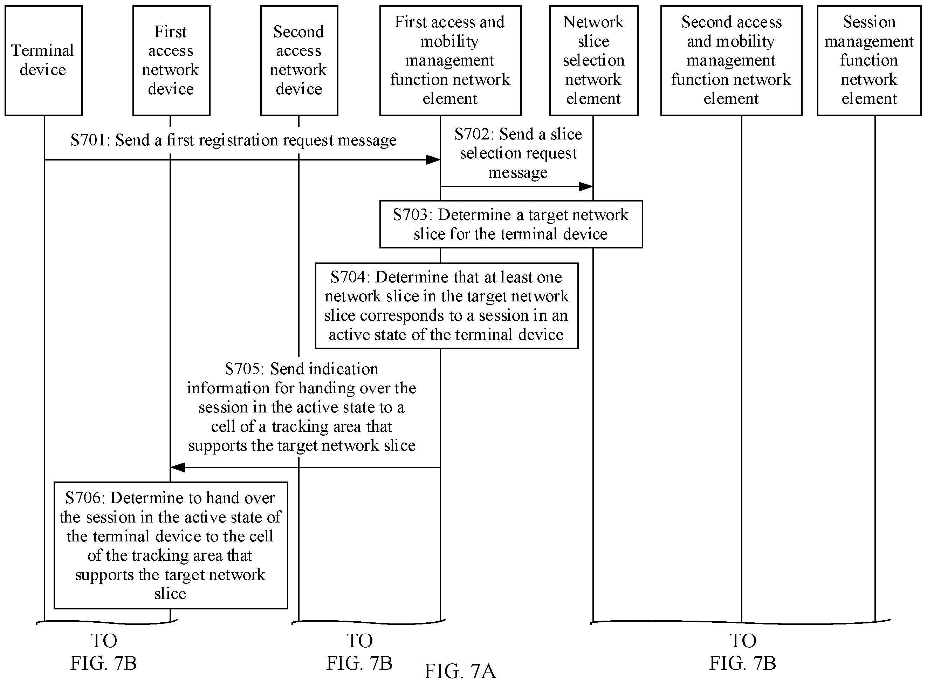

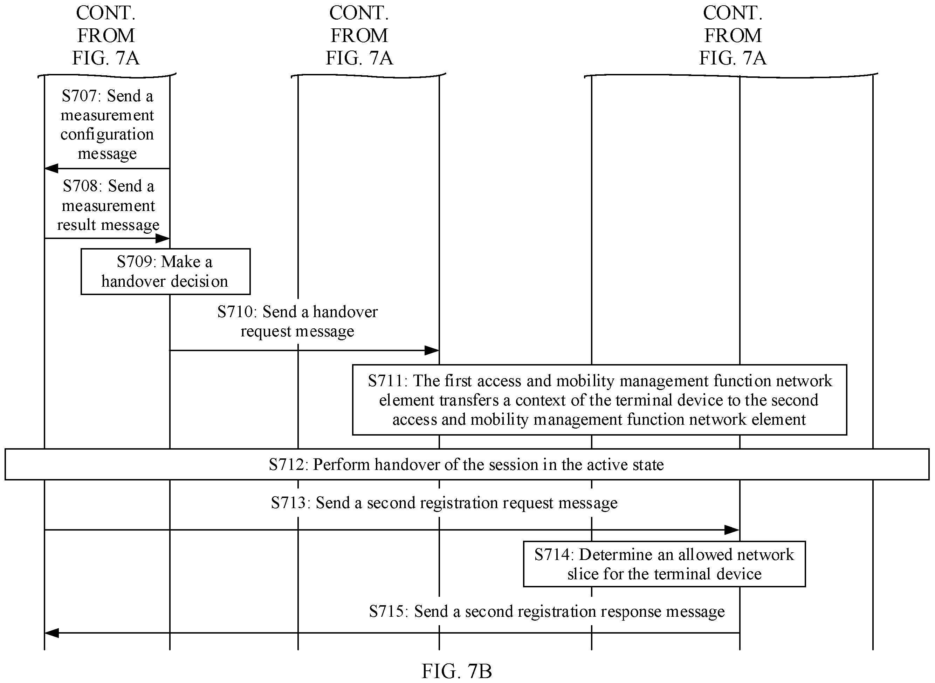

FIG. 7A and FIG. 7B are a schematic diagram of a slice-based communication method 700 according to an embodiment of this application. FIG. 7A and FIG. 7B are described with reference to FIG. 4 and FIG. 5. The method 700 includes the following steps.

S701: A terminal device sends a first registration request message to a first access and mobility management function network element. Correspondingly, the first access and mobility management function network element receives the first registration request message from the terminal device.

The first registration request message may include a requested network slice (requested NSSAI) for the terminal device.

S702: The first access and mobility management function network element sends a slice selection request message to a network slice selection function network element. Correspondingly, the network slice selection function network element receives the slice selection request message from the first access and mobility management function network element.

For example, the first access and mobility management function network element may determine that each network slice in the requested network slice is a subscribed network slice for the terminal device, or a network slice that is mapped from the subscribed network slice for the terminal device to a currently visited network of the terminal device. Then, the first access and mobility management function network element may determine a used network slice for the terminal device or a to-be-used network slice for the terminal device. Finally, the first access and mobility management function network element may send the slice selection request message to the network slice selection function network element, to request the network slice selection function network element to determine a target network slice (target NSSAI) and an allowed network slice (allowed NSSAI) for the terminal device. The slice selection request message carries information such as a current tracking area of the terminal device and the requested network slice for the terminal device, and may further carry at least one piece of information about the used network slice or the to-be-used network slice.

For a description in which the first access and mobility management function network element may determine the used network slice or the to-be-used network slice, refer to the related description in S601 in which the network device obtains the used network slice or the to-be-used network slice. For brevity, details are not described herein again in this application.

It should be understood that in this solution, if the first access and mobility management function network element independently performs the step of determining the allowed network slice and the target network slice for the terminal device, the first access and mobility management function network element does not send the slice selection request message to the network slice selection function network element.

S703: The first access and mobility management function network element or the network slice selection function network element determines the target network slice for the terminal device.

For example, the first access and mobility management function network element or the network slice selection function network element may determine the target network slice for the terminal device based on the requested network slice and at least one of the used network slice or the to-be-used network slice for the terminal device.

If the network slice selection function network element performs slice selection, the network slice selection function network element may send at least one piece of information in the target network slice to the first access and mobility management function network element based on a network slice selection response message.

Further, the network slice selection response message may further include information about the allowed network slice for the terminal device that requests registration this time.

Specifically, for a description in which the first access and mobility management function network element or the network slice selection function network element may determine the target network slice for the terminal device based on the requested network slice and the at least one of the used network slice or the to-be-used network slice for the terminal device, refer to the related description in S603 in which the network device determines the target network slice for the terminal device based on the requested network slice and the at least one of the used network slice or the to-be-used network slice. For brevity, details are not described herein again in this application. If the network slice selection function network element determines the target network slice for the terminal device, the first access and mobility management function network element obtains the target network slice for the terminal device from the network slice selection function network element based on the network slice selection response message.

Then, the first access and mobility management function network element may record the target network slice in a context of the terminal device.

In another possible implementation, if the network slice selection function network element determines that the tracking area in which the terminal device is currently located supports the requested network slice for the terminal device, but the first access and mobility management function network element does not support the requested network slice for the terminal device, the network slice selection function network element may determine a second access and mobility management function network element that is connected to the tracking area in which the terminal device is currently located and that supports the requested network slice for the terminal device, and send information about the second access and mobility management function network element to the first access and mobility management function network element. Then, the first access and mobility management function network element forwards a registration request message of the terminal device to the second access and mobility management function network element for processing. If the network slice selection function network element determines that the tracking area in which the terminal device is currently located does not support the requested network slice for the terminal device, the network slice selection function network element may determine the target network slice for the terminal device, and return information about the target network slice for the terminal device to the first access and mobility management function network element.

S704: The first access and mobility management function network element determines that at least one network slice in the target network slice corresponds to the session in the active state of the terminal device.

Specifically, for a description in which the first access and mobility management function network element determines that the at least one network slice in the target network slice corresponds to the session in the active state of the terminal device, refer to the related description in S402 in which the first access and mobility management function network element determines that the at least one network slice in the target network slice corresponds to the session in the active state of the terminal device. For brevity, details are not described herein again in this application.

S705: The first access and mobility management function network element sends, to a first access network device, indication information for handing over the session in the active state to a cell of a tracking area that supports the target network slice. Correspondingly, the first access network device receives, from the first access and mobility management function network element, the indication information for handing over the session in the active state to the cell of the tracking area that supports the target network slice.

Specifically, for a description in which the first access and mobility management function network element sends, to the first access network device, the indication information for handing over the session in the active state to the cell of the tracking area that supports the target network slice, refer to the related description in S403 in which the first access and mobility management function network element sends, to the first access network device, the indication information for handing over the session in the active state to the cell of the tracking area that supports the target network slice. For brevity, details are not described herein again in this application.

Optionally, the first access and mobility management function network element may further send a first registration response message to the terminal device via the first access network device. The first registration response message indicates that the terminal device successfully registers, and may carry at least one piece of information about the allowed network slice for the terminal device that requests to register this time or a registration area. Further, the registration response message may further carry a rejected network slice. For example, the rejected network slice is a network slice that is in the requested network slice and that is not supported by the current registration area of the terminal device, and indicates that the terminal device is rejected to continue to request to access the network slice in the rejected network slice in the current registration area.

Specifically, the first access and mobility management function network element sends an N2 interface message to the first access network device, and may send the first registration response message to the terminal device by encapsulating the first registration response message in the N2 interface message for transmission. The N2 interface message carries the target network slice. Optionally, the N2 interface message may further carry at least one of the indication information and RFSP information corresponding to the target network slice. The RFSP information corresponding to the target network slice is determined by the first access and mobility management function network element according to a local configuration policy, or is obtained by the first access and mobility management function network element by requesting the policy control function network element. For example, the RFSP information is an RFSP index (index).

S706: The first access network device determines to hand over the session in the active state of the terminal device to the cell of the tracking area that supports the target network slice.

For example, the first access network device may receive, from the first access and mobility management function network element in the step S705, the indication information for handing over the session in the active state of the terminal device to the cell of the tracking area that supports the target network slice, and determine, based on the indication information, to hand over the session in the active state of the terminal device to the cell of the tracking area that supports the target network slice.

Specifically, for a description of the indication information for handing over the session in the active state of the terminal device to the cell of the tracking area that supports the target network slice, refer to the related description in S403 of the indication information for handing over the session in the active state to the cell of the tracking area that supports the target network slice. For brevity, details are not described herein again in this application.

For example, the first access network device determines, based on the indication information carried in the N2 interface message, to hand over the session in the active state of the terminal device to the cell of the tracking area that supports the target network slice. The first access network device may generate a measurement configuration message for the terminal device based on the RFSP index that corresponds to the target network slice and that is carried in the N2 interface message.

S707: The first access network device sends the measurement configuration message to the terminal device. Correspondingly, the terminal device receives the measurement configuration message from the first access network device.

For example, the first access network device may send the measurement configuration message to the terminal device based on a radio resource management reconfiguration message. A carried radio parameter indicates the terminal device to measure signal quality of a frequency band in which a cell of a tracking area adjacent to the tracking area in which the terminal device is located is located.

For example, the first access and mobility management function network element or the network slice selection function network element determines that the tracking area #3 in which the terminal device is currently located does not support the target network slice, but the tracking area #4 and the tracking area #5 that cover a same area or a surrounding area of the tracking area #3 support the target network slice, or the tracking area #4 and the tracking area #5 that are adjacent to the tracking area #3 support the target network slice. In this case, the radio parameter carried in the measurement configuration message indicates the terminal device to measure signal quality of a frequency band in which the cell of the tracking area #4 or the cell of the tracking area #5 are located.

S708: The terminal device sends a measurement result message to the first access network device. Correspondingly, the first access network device receives the measurement result message from the terminal device.

S709: The first access network device makes a handover decision.

For example, if signal strength of an adjacent cell (located in the tracking area #4 or the tracking area #5) of a current cell of the terminal device reaches a specified threshold that meets a handover standard, the first access network device may determine to start handover.

S710: The first access network device sends a handover request message to the first access and mobility management function network element. Correspondingly, the first access and mobility management function network element receives the handover request message from the first access network device.

For example, the first access network device determines that handing over the session in the active state of the terminal device to a target cell needs to be controlled by a core network element, and sends a handover request to the first access and mobility management function network element. The handover request carries information about the session to be handed over and information about the target cell for handover (for example, the information about the target cell for handover includes an identifier of a tracking area TA to which the target cell belongs and an identifier of a second access network device that manages the target cell). For example, the session may be information about a session that has been separately established by using the network slice #3 and the network slice #4.

S711: The first access and mobility management function network element transfers a context of the terminal device to the second access and mobility management function network element.

For example, after receiving the handover request message, the first access and mobility management function network element determines, based on the identifier of the second access network device in the information about the target cell, that the second access network device that manages the target cell is connected to the second access and mobility management function network element, and then sends a request message for creating the context of the terminal device to the second access and mobility management function network element. The message carries the context of the terminal device, and the context of the terminal device includes the information about the target network slice. The second access and mobility management function network element returns, to the first access and mobility management function network element, a response message indicating that the context of the terminal device is successfully created.

S712: The first access network device, the second access network device, the first access and mobility management function network element, the second access and mobility management function network element, and a session management function network element jointly performs handover of the session in the active state.

For example, the first access network device, the second access network device, the first access and mobility management function network element, the second access and mobility management function network element, and the session management function network element may collaborate to hand over a context of the session in the active state from the first access network device and the first access and mobility management function network element to the second access network device and the second access and mobility management function network element.

Then, the session management function network element controls the first access network device, the second access network device, and a user plane function network element to hand over a user plane path of the session in the active state from the first access network device to the second access network device. Therefore, a service packet of the terminal device can still be normally transmitted during handover of the session in the active state, and the session is not interrupted.

Based on this solution, after determining the session that is in the active state, that is of the terminal device, and that corresponds to the at least one network slice in the target network slice, the first access and mobility management function network element may send, to the first access network device, the indication information for handing over the session in the active state to the cell of the tracking area that supports the target network slice. Further, in the conventional technology (for example, in the manner described in FIG. 2 or FIG. 3), in a process of redirecting a session of a terminal device in an active state, the terminal device needs to first disconnect an RRC connection to a cell in a tracking area before redirection, enter an RRC idle state, and then re-campus on a cell in a tracking area after redirection, so that the established session of the terminal device is active or interrupted. In this solution, the RRC connection does not need to be released. Instead, after determining that the at least one network slice in the target network slice corresponds to the session in the active state of the terminal device, the first access and mobility management function network element sends, to the first access network device, indication information for handing over the session in the active state to the cell of the tracking area that supports the target network slice, to complete session handover. Therefore, this solution can improve service stability of the terminal device, prevent the session in the active state of the terminal device from being interrupted when the terminal device registers with the network slice after accessing the cell that supports the target network slice for the terminal device, and improve user experience.

Optionally, the method further includes the following steps.

S713: The terminal device sends a second registration request message to the second access and mobility management function network element. Correspondingly, the second access and mobility management function network element receives the second registration request message from the terminal device.

For example, after handover is completed, the terminal device finds that the currently accessed cell does not belong to an original registration area, and then sends the second registration request message to the second access and mobility management function network element via the second access network device. The second registration request message carries the requested network slice. After leaving the original registration area, the terminal device may attempt to register with as many network slices as possible.

S714: The second access and mobility management function network element or the network slice selection function network element determines the allowed network slice for the terminal device.

In a possible implementation, the second access and mobility management function network element receives a registration request after the terminal device is handed over, determines the at least one of the used network slice for the terminal device or the to-be-used network slice for the terminal device by using the target network slice recorded in the context of the terminal device, and then determines a first allowed network slice for the terminal device based on the requested network slice and the at least one of the used network slice for the terminal device or the to-be-used network slice for the terminal device, to determine a tracking area corresponding to the allowed network slice and a registration area corresponding to the allowed network slice.

In another possible implementation, after determining the at least one of the used network slice for the terminal device or the to-be-used network slice for the terminal device, the second access and mobility management function network element may send the requested network slice and the at least one of the used network slice for the terminal device or the to-be-used network slice for the terminal device to the network slice selection function network element. The network slice selection function network element determines the first allowed network slice for the terminal device based on the requested network slice and the at least one of the used network slice for the terminal device or the to-be-used network slice for the terminal device, to determine a tracking area corresponding to the first allowed network slice and a registration area corresponding to the first allowed network slice.

For a description in which the second access and mobility management function network element or the network slice selection function network element determines the first allowed network slice for the terminal device based on the requested network slice and the at least one of the used network slice for the terminal device or the to-be-used network slice for the terminal device, refer to the related description in S602 in which the network device determines the first allowed network slice for the terminal device based on the requested network slice and the at least one of the used network slice or the to-be-used network slice. For brevity, details are not described herein again in this application.

S715: The second access and mobility management function network element sends a second registration response message to the terminal device. Correspondingly, the terminal device receives the second registration response message from the second access and mobility management function network element.

For example, the second access and mobility management function network element may send the second registration response message to the terminal device via the second access network device. The registration response message may carry the information about the allowed network slice, or the information about the allowed network slice and information about the registration area corresponding to the allowed network slice.

In the foregoing solution, an appropriate allowed network slice for the terminal device may be determined based on a communication requirement of the terminal device, so that a quantity of network slices in the allowed network slice is reduced, a range of the registration area corresponding to the allowed network slice is maximized, and a signaling load in a movement process of the terminal device is reduced.

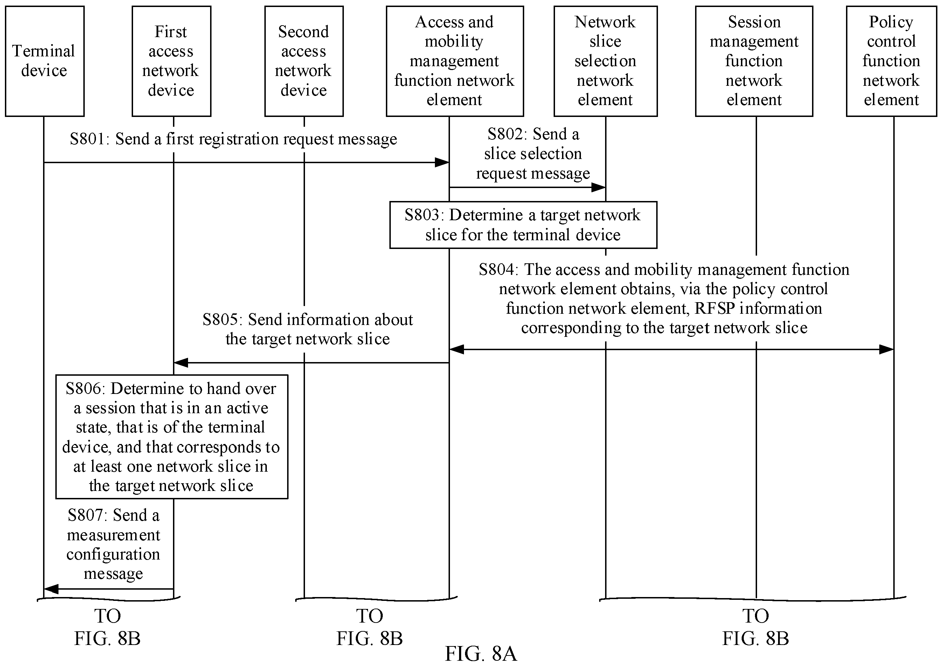

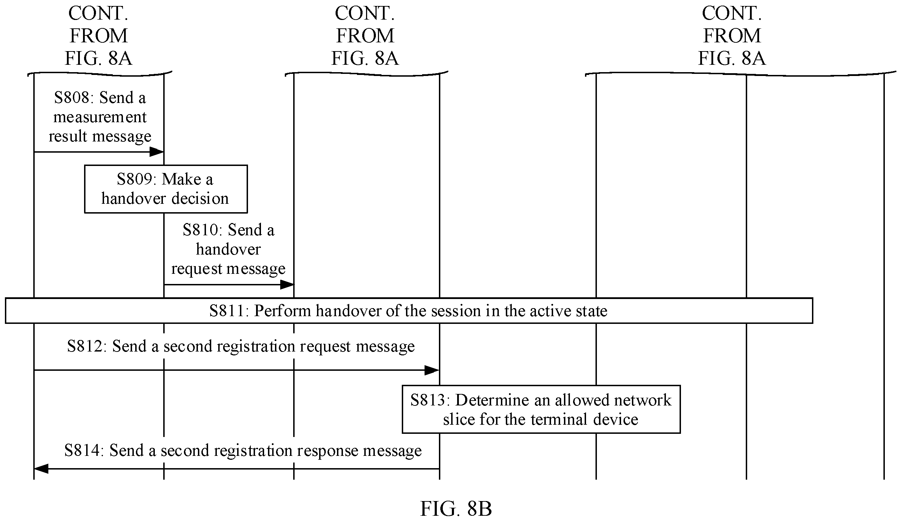

FIG. 8A and FIG. 8B are a schematic diagram of a slice-based communication method 800 according to an embodiment of this application. A difference between FIG. 8A and FIG. 8B and FIG. 7A and FIG. 7B lies in that the method shown in FIG. 7A and FIG. 7B is applicable to a solution in which an access and mobility management function network element needs to be changed, and the method shown in FIG. 8A and FIG. 8B is applicable to a solution in which an access and mobility management function network element does not need to be changed. In addition, in another possible implementation to replace step 704, if a first access and mobility management function network element does not determine that at least one network slice in a target network slice corresponds to a session in an active state of a terminal device, in the method shown in FIG. 8A and FIG. 8B, a first access network device may determine to hand over the session that is in the active state, that is of the terminal device, and that corresponds to the at least one network slice in the target network slice. The method 800 includes the following steps.

S801: The terminal device sends a first registration request message to the access and mobility management function network element. Correspondingly, the access and mobility management function network element receives the first registration request message from the terminal device.

The first registration request message may include a requested network slice for the terminal device.

S802: The access and mobility management function network element sends a slice selection request message to a network slice selection function network element. Correspondingly, the network slice selection function network element receives the slice selection request message from the access and mobility management function network element.

For example, the access and mobility management function network element may determine that each network slice in the requested network slice is a subscribed network slice for the terminal device, or a network slice that is mapped from the subscribed network slice for the terminal device to a currently visited network of the terminal device. Then, the access and mobility management function network element may determine a used network slice or a to-be-used network slice. Finally, the access and mobility management function network element may send a slice selection request message to the network slice selection function network element, to request the network slice selection function network element to select a network slice for the terminal device. The slice selection request message carries information such as a current tracking area of the terminal device and a requested network slice for the terminal device, and may further carry at least one piece of information about the used network slice or the to-be-used network slice.

For a description in which the access and mobility management function network element may determine the used network slice or the to-be-used network slice, refer to the related description in S601 in which the network device obtains the used network slice or the to-be-used network slice. For brevity, details are not described herein again in this application.

It should be understood that in this solution, if the access and mobility management function network element independently performs the step of selecting the network slice, the access and mobility management function network element does not send the slice selection request message to the network slice selection function network element.

S803: The access and mobility management function network element or the network slice selection function network element determines the target network slice for the terminal device.

For example, the access and mobility management function network element or the network slice selection function network element may determine the target network slice for the terminal device based on the requested network slice and at least one of the used network slice or the to-be-used network slice for the terminal device.

Specifically, for a description in which the access and mobility management function network element or the network slice selection function network element determines the target network slice for the terminal device based on the requested network slice and the at least one of the used network slice or the to-be-used network slice for the terminal device, refer to the related description in S603 in which the network device determines the target network slice for the terminal device based on the requested network slice and the at least one of the used network slice or the to-be-used network slice. For brevity, details are not described herein again in this application.

In another implementation, the access and mobility management function network element or the network slice selection function network element may further determine that an allowed network slice for the terminal device that requests registration this time remains unchanged, and a registration area corresponding to the allowed network slice also remains unchanged.

In another implementation, the access and mobility management function network element or the network slice selection function network element may further determine that the allowed network slice for the terminal device that registers this time no longer includes a network slice for a session that has been released for a long time, and includes only a network slice for an ongoing session. For a specific description in which the access and mobility management function network element or the network slice selection function network element determines the allowed network slice for the terminal device that registers this time, refer to the related description in S602 in which the network device determines the first allowed network slice for the terminal device based on the requested network slice and the at least one of the used network slice or the to-be-used network slice. For brevity, details are not described herein again in this application.

In another implementation, the access and mobility management function network element or the network slice selection function network element may further use a network slice for a session that is just released as the to-be-used network slice (that is, a network slice that may be used to establish a new session) for the terminal device, and determine the allowed network slice for the terminal device based on the requested network slice and the at least one of the used network slice or the to-be-used network slice for the terminal device.

In any one of the another implementations, the registration area corresponding to the allowed network slice no longer includes a tracking area that supports the target network slice, and a tracking area that supports the allowed network slice for the terminal device and that is not adjacent to any tracking area in the registration area is not included in the registration area.

S804: The access and mobility management function network element obtains, via the policy control function network element, RFSP information corresponding to the target network slice.

Optionally, the access and mobility management function network element may request the policy control function network element to obtain the RFSP information corresponding to the target network slice

In another implementation, if the RFSP information corresponding to the target network slice is determined by the access and mobility management function network element according to a local configuration policy, S804 does not need to be performed.

It should be understood that this step may also be applied to the method 700. For example, this step may be performed after S703 in FIG. 7A.

S805: The first access and mobility management function network element sends information about the target network slice to the first access network device. Correspondingly, the first access network device receives the information about the target network slice from the access and mobility management function network element.

For a description in which the first access network device receives the target network slice information from the first access and mobility management function network element, refer to the description in S502 in which the first access network device may receive, from the first access and mobility management function network element, the indication information for handing over the session in the active state to the cell of the tracking area that supports the target network slice, and the indication information is the information about the target network slice. For brevity, details are not described herein again in this application.

S806: The first access network device determines to hand over the session that is in the active state, that is of the terminal device, and that corresponds to the at least one network slice in the target network slice.

For example, after receiving the indication information for handing over the session in the active state to the cell of the tracking area that supports the target network slice, the first access network device may determine to hand over the session that is in the active state, that is of the terminal device, and that corresponds to the at least one network slice in the target network slice.

Specifically, for a description in which the first access network device determines to hand over the session that is in the active state, that is of the terminal device, and that corresponds to the at least one network slice in the target network slice, refer to the related description in S502 in which the first access network device determines to hand over the session that is in the active state, that is of the terminal device, and that corresponds to the at least one network slice in the target network slice. The first access network device determines, based on the received target network slice for the terminal device and session status information that is in a context of the terminal device and that is stored by the first access network device, that at least one network slice corresponding to the session in the active state of the terminal device belongs to the target network slice.

Optionally, the access and mobility management function network element may send a first registration response message to the terminal device via the first access network device. Correspondingly, the terminal device receives the first registration response message from the access and mobility management function network element via the first access network device.

Optionally, the access and mobility management function network element may further send a first registration response message to the terminal device via the first access network device. The first registration response message indicates that the terminal device successfully registers, and may carry at least one piece of information about the allowed network slice for the terminal device that requests to register this time or a registration area. Further, the registration response message may further carry a rejected network slice. The rejected network slice is a network slice that is in the requested network slice and that is not supported by the current registration area of the terminal device, and indicates that the terminal device is rejected to continue to request to access the network slice in the rejected network slice in the current registration area.

In addition, the access and mobility management function network element may further send an N2 interface message to the first access network device. The N2 interface message carries the target network slice. Optionally, the N2 interface message may further carry at least one of the indication information and the RFSP information corresponding to the target network slice. The RFSP information corresponding to the target network slice is determined by the first access and mobility management function network element according to a local configuration policy, or is obtained by the first access and mobility management function network element by requesting the policy control function network element. For example, the RFSP information is an RFSP index (index).

S807: The first access network device sends the measurement configuration message to the terminal device. Correspondingly, the terminal device receives the measurement configuration message from the first access network device.

For example, the first access network device may send the measurement configuration message to the terminal device based on a radio resource management reconfiguration message. A carried radio parameter indicates the terminal device to measure signal quality of a frequency band in which a cell of a tracking area adjacent to the tracking area in which the terminal device is located is located.

For example, the first access and mobility management function network element or the network slice selection function network element determines that the tracking area #3 in which the terminal device is currently located does not support the target network slice, but the tracking area #4 and the tracking area #5 that cover a same area or a surrounding area of the tracking area #3 support the target network slice, or the tracking area #4 and the tracking area #5 that are adjacent to the tracking area #3 support the target network slice. In this case, the radio parameter carried in the measurement configuration message indicates the terminal device to measure signal quality of a frequency band in which the cell of the tracking area #4 or the cell of the tracking area #5 are located.

S808: The terminal device sends a measurement result message to the first access network device. Correspondingly, the first access network device receives the measurement result message from the terminal device.

S809: The first access network device makes a handover decision.

For example, if signal strength of an adjacent cell (located in the tracking area #4 or the tracking area #5) of a current cell of the terminal device reaches a specified threshold that meets a handover standard, the first access network device may determine to start handover.

S810: The first access network device sends a handover request message to the second access network device. Correspondingly, the second access network device receives the handover request message from the first access network device.

For example, the first access network device determines that handing over the session in the active state of the terminal device to a target cell needs to be controlled by a core network element, and sends a handover request to the access and mobility management function network element. The handover request carries information about a session to be handed over and information about a target cell for handover. For example, the session may be information about a session that has been separately established by using the network slice #3 and the network slice #4.

S811: The first access network device, the second access network device, the access and mobility management function network element, and a session management function network element jointly performs handover of the session in the active state.

For example, the first access network device, the second access network device, the access and mobility management function network element, and the session management function network element may collaborate to hand over the context of the session in the active state from the first access network device to the second access network device.

Then, the session management function network element controls the first access network device, the second access network device, and a user plane function network element to hand over a user plane path of the session in the active state from the first access network device to the second access network device. Therefore, a service packet of the terminal device can still be normally transmitted during handover of the session in the active state, and the session is not interrupted.

Based on this solution, after determining the session that is in the active state, that is of the terminal device, and that corresponds to the at least one network slice in the target network slice, the access and mobility management function network element may send, to the first access network device, the indication information for handing over the session in the active state to the cell of the tracking area that supports the target network slice. Further, in the conventional technology (for example, in the manner described in FIG. 2 or FIG. 3), in a process of redirecting a session of a terminal device in an active state, the terminal device needs to first disconnect an RRC connection to a cell in a tracking area before redirection, enter an RRC idle state, and then re-campus on a cell in a tracking area after redirection, so that the established session of the terminal device is active or interrupted. In this solution, the RRC connection does not need to be released. Instead, the access and mobility management function network element sends, to the first access network device, indication information for handing over the session in the active state to the cell of the tracking area that supports the target network slice, to complete session handover. Therefore, this solution can improve service stability of the terminal device, prevent the session in the active state of the terminal device from being interrupted when the terminal device registers with the network slice after accessing the cell that supports the target network slice for the terminal device, and improve user experience.

Optionally, the method further includes the following steps.

S812: The terminal device sends a second registration request message to the access and mobility management function network element.

For example, after handover is completed, the terminal device finds that the currently accessed cell does not belong to an original registration area, and then sends the second registration request message to the second access and mobility management function network element via the second access network device. The second registration request message carries the requested network slice, and the requested network slice may be {network slice #1, network slice #2, network slice #3, network slice #4, network slice #5}. In other words, after leaving the original registration area, the terminal device may attempt to register with as many network slices as possible.

S813: The access and mobility management function network element or the network slice selection function network element determines a second allowed network slice for the terminal device.

For example, for a description in which the access and mobility management function network element or the network slice selection function network element determines the second allowed network slice for the terminal device, refer to the related description in S714 in which the second access and mobility management function network element or the network slice selection function network element determines the allowed network slice for the terminal device. For brevity, details are not described herein again in this application.

S814: The access and mobility management function network element sends a second registration response message to the terminal device. Correspondingly, the terminal device receives the second registration response message from the access and mobility management function network element.

For example, the access and mobility management function network element may send the second registration response message to the terminal device via the second access network device. The registration response message may carry the information about the allowed network slice, or the information about the allowed network slice and information about the registration area corresponding to the allowed network slice.

In addition, in the foregoing solution, an appropriate allowed network slice for the terminal device may be determined based on a communication requirement of the terminal device, so that a quantity of network slices in the allowed network slice is reduced, a range of the registration area corresponding to the allowed network slice is maximized, and a signaling load in a movement process of the terminal device is reduced.

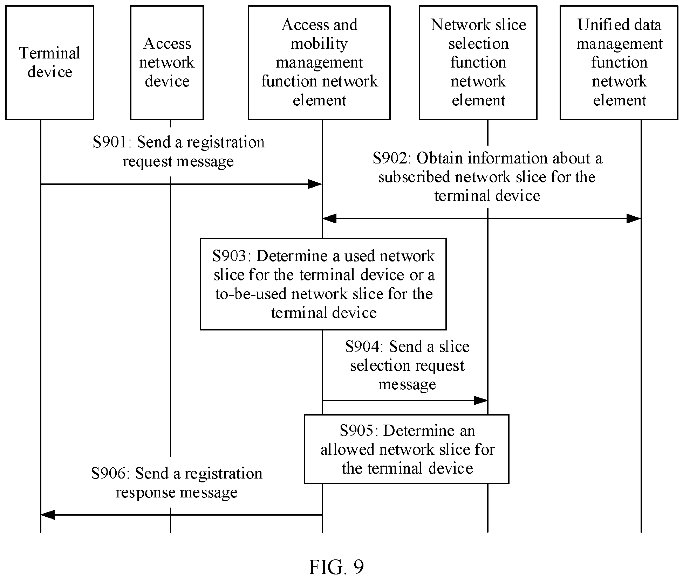

FIG. 9 is a schematic diagram of a slice-based communication method 900 according to an embodiment of this application. The method 900 includes the following steps.

S901: A terminal device sends a registration request message to an access and mobility management function network element. Correspondingly, the access and mobility management function network element receives the registration request message from the terminal device.

The registration request message may include a requested network slice for the terminal device.

Specifically, when the terminal device accesses the network after being powered on, or moves to a new tracking area that does not belong to an original registration area, or periodically registers with the network for update, the terminal device may send the registration request message to the access and mobility management function network element via the access network device. The registration request message carries the requested network slice.

Further, the registration request message may further carry status information (a PDU session status) of an established session of the terminal device. When a terminal device registers with the network, the following situations may occur.

In a possible implementation, the terminal device registers with the current network for a first time, or the terminal device has left an original registration area (for example, a tracking area to which a currently camped cell belongs exceeds the original registration area), and the terminal device may carry, in the requested network slice, all network slices that are in a configured network slice and that are other than a rejected network slice in a range of a current public land mobile network.

In another possible implementation, the tracking area in which the terminal device is currently located still belongs to a registration area registered with a previous network, and the terminal device expects to establish a session by using one or more specific network slices. If single-network slice selection assistance information of these specific network slices (for example, a to-be-used network slice for the terminal device) is not in the requested network slice, the terminal device may carry, in addition to the allowed network slice, the single-network slice selection assistance information of these to-be-used network slices for the terminal device in the requested network slice.

S902: The access and mobility management function network element obtains, from a unified data management function network element, information about a subscribed network slice for the terminal device.

For example, the access and mobility management function network element may obtain network slice subscription information of the terminal device via the unified data management function network element, and determine that each network slice carried in the requested network slice is a subscribed network slice for the terminal device, or a network slice that is mapped from the subscribed network slice to a currently visited network of the terminal device. Otherwise, the terminal device does not subscribe to a service related to a network slice, and the network slice is deleted by the access and mobility management function network element.

In addition, the access and mobility management function network element may further determine, based on the network slice subscription information of the terminal device, which network slice is a default subscribed network slice for the terminal device, or a network slice to which the default subscribed network slice is mapped in the currently visited network.

S903: The access and mobility management function network element determines a used network slice for the terminal device or the to-be-used network slice for the terminal device.

Specifically, for a description in which the access and mobility management function network element determines the used network slice for the terminal device or the to-be-used network slice for the terminal device, refer to the related description in S402 in which the first access and mobility management function network element determines the used network slice or the to-be-used network slice. For brevity, details are not described herein again in this application.

S904: The access and mobility management function network element sends a slice selection request message to a network slice selection function network element. Correspondingly, the network slice selection function network element receives the slice selection request message from the access and mobility management function network element.

For example, the access and mobility management function network element may send the slice selection request message to the network slice selection function network element. The slice selection request message is used to request the network slice selection function network element to determine the allowed network slice for the terminal device. The slice selection request message may carry information such as a current tracking area of the terminal device and the requested network slice for the terminal device, and may further carry the at least one of the used network slice for the terminal device or the to-be-used network slice for the terminal device.

It should be understood that if the access and mobility management function network element subsequently independently performs network slice selection, S904 is not performed.

S905: The access and mobility management function network element or the network slice selection function network element determines the allowed network slice for the terminal device.

Specifically, for a description in which the access and mobility management function network element or the network slice selection function network element determines the allowed network slice for the terminal device, refer to the related description in S602 in which the network device determines the first allowed network slice for the terminal device based on the requested network slice and the at least one of the used network slice or the to-be-used network slice. For brevity, details are not described herein again in this application.

S906: The access and mobility management function network element sends a registration response message to the terminal device. Correspondingly, the terminal device receives the registration response message from the access and mobility management function network element.

For example, the access and mobility management function network element may send the registration response message to the terminal device via the access network device. The registration response message may carry at least one piece of information about the allowed network slice or the registration area corresponding to the allowed network slice.

Based on this solution, the allowed network slice for the terminal device is determined based on the requested network slice and at least one of the used network slice or the to-be-used network slice for the terminal device, and the information about the allowed network slice is sent. An appropriate allowed network slice may be determined based on a communication requirement of the terminal device. Compared with a solution of determining the allowed network slice in the conventional technology, a quantity of network slices included in the allowed network slice can be effectively reduced, a range of the registration area corresponding to the allowed network slice is maximized, and a signaling load in a movement process of the terminal device is reduced.

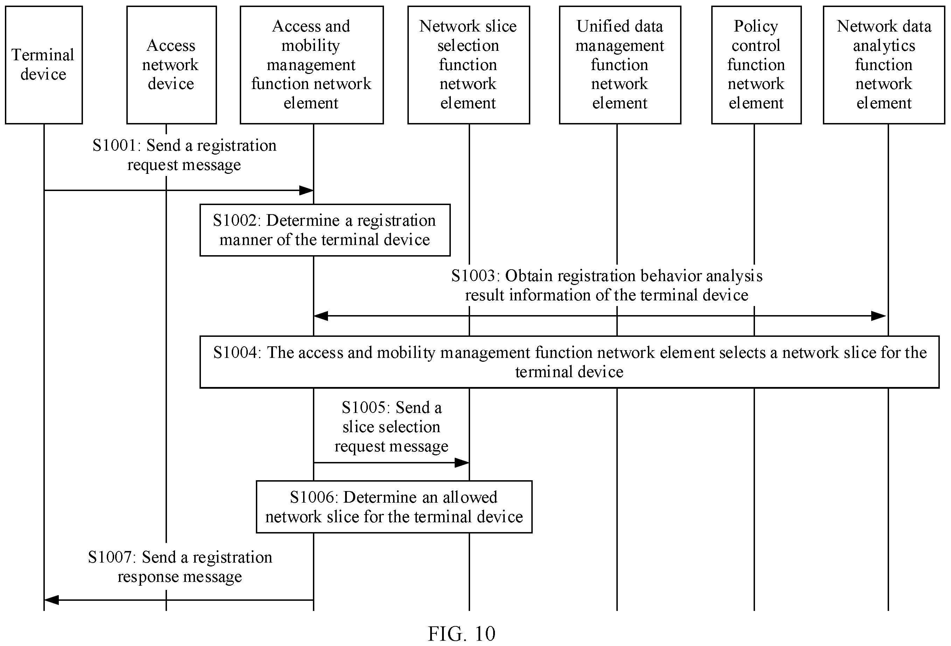

FIG. 10 is a schematic diagram of a slice determining method 1000 according to an embodiment of this application. The method 1000 includes the following steps.

S1001: A terminal device sends a registration request message to an access and mobility management function network element. Correspondingly, the access and mobility management function network element receives the registration request message from the terminal device.

For example, the terminal device that has registered with the network may periodically send the registration request message to the access and mobility management function network element via the access network device. Alternatively, when the terminal device expects to establish a session in a specific network slice, the terminal device may send the registration request message to the access and mobility management function network element via the access network device. The registration request message may include the requested network slice for the terminal device.

In a possible implementation, except for a network slice that is explicitly rejected by the access and mobility management function network element in previous network registration, the terminal device may include, in the requested network slice, all other network slices in a configured network slice. In this manner, the terminal device does not request to access a network slice based on a requirement for establishing a session. This behavior is referred to as registering with the network slice by the terminal device in a manner of "registration with as many network slices as possible".

In another possible implementation, the terminal device includes, in the requested network slice for accessing, only a network slice that is explicitly allowed by the access and mobility management function network element in previous network registration and a network slice that the terminal device expects to establish a session. In this manner, the terminal device requests to access a network slice based on a requirement for establishing a session. This behavior is referred to as registering with the network slice by the terminal device in a manner of "registration as required".

S1002: The access and mobility management function network element determines a registration manner of the terminal device.

For example, after receiving the registration request message, the access and mobility management function network element may determine, based on any one of the following manners, a manner in which the terminal device registers with the network slice.

The access and mobility management function network element determines, based on the requested network slice carried in the registration request message and the allowed network slice and the configured network slice that are in the context of the terminal device and that are of the access and mobility management function network element, whether the terminal device may establish the session by using a network slice that is in the requested network slice and that does not belong to the allowed network slice.

For example, the access and mobility management function network element may determine whether all network slices that are other than a rejected network slice and the allowed network slice and that are in the configured network slice are included in the requested network slice. If no, the access and mobility management function network element determines that the manner in which the terminal device registers with the network slice is registering with the network slice in the manner of "registration as required".

S1003: The access and mobility management function network element obtains registration behavior analysis result information of the terminal device from a network data analytics function network element.

For example, the access and mobility management function network element may obtain the registration behavior analysis result information of the terminal device via the network data analytics function network element. The registration behavior analysis result information includes whether a manner of registering with a network slice by the terminal device complies with the manner of "registration as required". The method specifically includes:

First, the access and mobility management function network element may send an analysis request message or an analysis subscription request message to the network data analytics function network element, to request to obtain a registration behavior analysis result of the terminal device. The analysis request message or the analysis subscription request message carries analysis identifier information for registration behavior analysis of the terminal device, and carries identity information such as a user permanent identifier of the terminal device.

In addition, the network data analytics function network element may collect, from each access and mobility management function network element based on the identity information of the terminal device, information about the requested network slice carried in the previous registration request of the terminal device, information about the allowed network slice and information about the rejected network slice that are obtained based on the previous registration result, and information about the configured network slice for the terminal device. Optionally, the network data analytics function network element may further collect, from the access and mobility management function network element or the session management function network element, attribute information (namely, the used network slice for the terminal device) of a network slice for a session previously established by the terminal device. The network data analytics function network element may associate the foregoing data to determine whether the terminal device adds a corresponding network slice to the requested network slice only when the terminal device needs to establish a session. In other words, the network data analytics function network element can analyze and output whether a registration behavior of the terminal device complies with the manner of "registration as required".

Finally, the network data analytics function network element may send an analysis result of whether the registration behavior of the terminal device complies with the manner of "registration as required" to the access and mobility management function network element.

It should be understood that in this solution, if S1002 is performed, S1003 may not be performed; or if S1002 is not performed, S1003 may be performed.

S1004: The access and mobility management function network element selects a network slice for the terminal device.

Specifically, the access and mobility management function network element may select the network slice for the terminal device in any one of the following manners.
(1) When the terminal device performs initial network registration, or when the access and mobility management function network element cannot obtain a context of the terminal device from a previous access and mobility management function network element, the access and mobility management function network element may obtain network slice subscription information of the terminal device via a unified data management function network element, and whether a network slice included in the network slice subscription information is a default network slice. Further, the network slice subscription information may further include priority information of a network slice. Then, the access and mobility management function network element may assign different priorities to subscribed network slices based on service importance or usage frequency of the used network slice for the terminal device, and then determine, based on a priority of the default network slice or the subscribed network slice, that the default network slice or a corresponding network slice that is in a visited network and to which the default network slice is mapped is a network slice (that is, a to-be-used network slice for the terminal device) in which the session may be established, or determine that a high-priority network slice or a corresponding network slice that is in the visited network and to which the high-priority network slice is mapped is a network slice (that is, the to-be-used network slice for the terminal device) in which the session may be established.
(2) The access and mobility management function network element may obtain communication behavior analysis result information of the terminal device via the network data analytics function network element. The communication behavior analysis result information includes information about a network slice that may be used by the terminal device to establish the session at a current location. The method specifically includes:

First, the access and mobility management function network element may send an analysis request message or an analysis subscription request message to the network data analytics function network element, to request to obtain a communication behavior analysis result of the terminal device. The analysis request message or the analysis subscription request message carries analysis identifier information for communication behavior analysis of the terminal device, and carries identity information such as a user permanent identifier of the terminal device.

In addition, the network data analytics function network element may collect, from each access and mobility management function network element or session management function network element based on the identity information of the terminal device, information such as time, a location, and a network slice attribute of a previous session established by the terminal device. The network data analytics function network element may analyze and predict, by associating the foregoing data, a probability that the terminal device establishes a session at a specified location and/or within specified time by using each of the at least one network slice.

Finally, the network data analytics function network element sends, to the access and mobility management function network element, an analysis and prediction result of the probability that the terminal device establishes a session by using each of the at least one network slice. The access and mobility management function network element may determine that a network slice whose probability of establishing a session reaches or exceeds a preset threshold is a network slice (that is, the to-be-used network slice for the terminal device) in which a session may be established.

(3) The access and mobility management function network element may obtain access management policy (AM-policy) information via a policy control function network element. The access management policy information includes information about a network slice (that is, the to-be-used network slice for the terminal device) in which the terminal device may establish the session at the current geographical location. The method specifically includes:

First, the access and mobility management function network element may send, to the policy control function network element, a request message for establishing a management policy association. The request message may carry identity information of a tracking area in which the terminal device is currently located or geographical location information of the terminal device. Further, the request message may further carry at least one piece of information of a requested network slice or a subscribed network slice that is for the terminal device and that is carried in the registration request.

In addition, the policy control function network element may determine, based on the policy information that is of the terminal device and that is obtained via a user data repository, information about the network slice in which the terminal device may establish the session at the current geographical location. For example, when the terminal device is at the current location, the network slice in which the terminal device may establish the session includes a network slice included in a user route selection policy delivered by the terminal device. When the terminal device is at another location, the network slice in which the terminal device may establish the session does not include the current location of the terminal device, and does not belong to a network slice allowed by a service area.

Finally, the policy control function network element sends, to the access and mobility management function network element by establishing a management policy establishment message or a management policy modification message, the information about the network slice in which the terminal device may establish the session at the current geographical location. In other words, the access and mobility management function network element may determine that the network slice in which the terminal device may establish the session at the current geographical location is a network slice that may be used.

(4) When the access and mobility management function network element determines, in step S1003, that the registration behavior of the terminal device complies with the manner of "registration as required", the access and mobility management function network element uses all network slices in the requested network slice carried by the terminal device in the step S1001 as network slices that may be used.

S1005: The access and mobility management function network element sends a slice selection request message to a network slice selection function network element. Correspondingly, the network slice selection function network element receives the slice selection request message from the access and mobility management function network element.

The slice selection request message may carry at least one piece of information about the current tracking area of the terminal device or the requested network slice for the terminal device, and may carry information obtained by the access and mobility management function network element via the unified data management function network element, the network data analytics function network element, or the policy control function network element in S1004.

It should be understood that in the foregoing solution, if the access and mobility management function network element independently selects a network slice for the terminal device from network slices, S1005 does not need to be performed.

S1006: The access and mobility management function network element or the network slice selection function network element determines the allowed network slice for the terminal device.

For example, the access and mobility management function network element or the network slice selection function network element may determine each network slice in which the terminal device may establish a session, determine the allowed network slice for the terminal device based on at least one of network slices in which the terminal device may establish a session, the current tracking area of the terminal device, and the requested network slice for the terminal device, and further determine the registration area corresponding to the allowed network slice for the terminal device. The method specifically includes:

The access and mobility management function network element or the network slice selection function network element may obtain, as the allowed network slice, an intersection set of a set of network slices in which a session may be established and a set of network slices supported by the current tracking area of the terminal device. Then, the access and mobility management function network element or the network slice selection function network element may determine whether each tracking area around the TA in which the terminal device is currently located supports the allowed network slice. If a tracking area around the TA in which the terminal device is currently located supports the allowed network slice, the tracking area around the TA in which the terminal device is currently located is included in the registration area, and finally determines a registration area corresponding to the allowed network slice.

It should be understood that if the allowed network slice for the terminal device is determined by the network slice selection function network element, the network slice selection function network element may send the information about the allowed network slice for the terminal device to the access and mobility management function network element.

S1007: The access and mobility management function network element sends a registration response message to the terminal device. Correspondingly, the terminal device receives the registration response message from the access and mobility management function network element.

For example, the access and mobility management function network element may send the registration response message to the terminal device via the access network device. The registration response message may carry at least one piece of information about the allowed network slice or the registration area corresponding to the allowed network slice.

Based on this solution, the allowed network slice for the terminal device is determined based on the used network slice or the to-be-used network slice for the terminal device, and the information about the allowed network slice is sent. Compared with the method for determining the allowed network slice in the conventional technology, in this solution, an appropriate allowed network slice may be determined based on a communication requirement of the terminal device, to minimize a quantity of network slices included in the allowed network slice, maximize a range of the registration area corresponding to the allowed network slice, and reduce a signaling load in a movement process of the terminal device.

Embodiments described in this specification may be independent solutions, or may be combined based on internal logic. All these solutions fall within the protection scope of this application.

It may be understood that, in the foregoing method embodiments, the methods and the operations implemented by the terminal device may alternatively be implemented by a component (for example, a chip or a circuit) used in the terminal device, and the methods and the operations implemented by the network device may alternatively be implemented by a component (for example, a chip or a circuit) used in the network device.

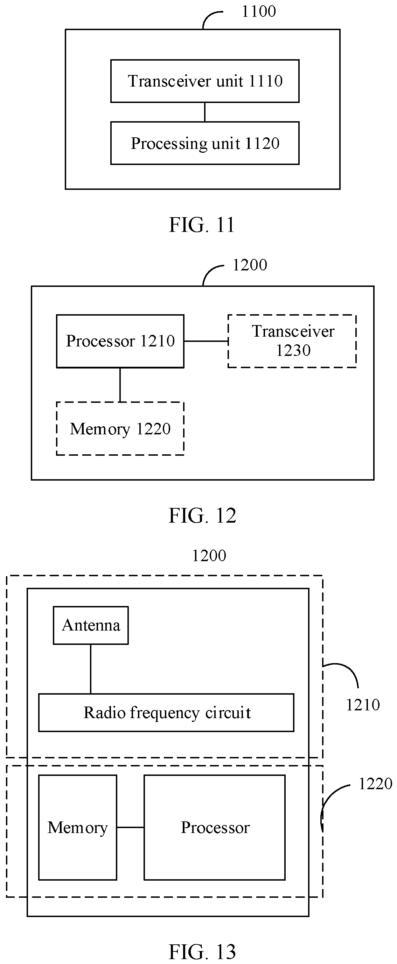

The method provided in embodiments of this application is described above in detail with reference to FIG. 4 to FIG. 10. The following describes in detail a communication apparatus provided in embodiments of this application with reference to FIG. 11 to FIG. 13. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element such as a transmitting end device or a receiving end device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional module division may be performed on the transmitting end device or the receiving end device based on the foregoing method example. For example, each functional module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 11 is a schematic block diagram of a communication apparatus 1100 according to an embodiment of this application. The communication apparatus 1100 includes a transceiver unit 1110 and a processing unit 1120. The transceiver unit 1110 may implement a corresponding communication function, and the processing unit 1110 is configured to process data. The transceiver unit 1110 may also be referred to as a communication interface or a communication unit.

Optionally, the communication apparatus 1100 may further include a storage unit. The storage unit may be configured to store instructions and/or data. The processing unit 1120 may read the instructions and/or the data in the storage unit, to enable the communication apparatus to implement the foregoing method embodiments.

The communication apparatus 1100 may be configured to perform the actions performed by the first access and mobility management function network element in the foregoing method embodiments. In this case, the communication apparatus 1100 may be the first access and mobility management function network element or a component that can be configured in the first access and mobility management function network element. The transceiver unit 1110 is configured to perform the receiving and sending-related operations at the first access and mobility management function network element in the foregoing method embodiments. The processing unit 1120 is configured to perform the processing-related operations at the first access and mobility management function network element in the foregoing method embodiments.

In a design, the communication apparatus 1100 is configured to perform the actions performed by the first access and mobility management function network element in the embodiment shown in FIG. 4, the transceiver unit 1110 is configured to perform S403, and the processing unit 1120 is configured to perform S401 and S402.

In another design, the communication apparatus 1100 is configured to perform the actions performed by the first access and mobility management function network element in the embodiment shown in FIG. 5, and the transceiver unit 1110 is configured to perform S501.

Alternatively, the communication apparatus 1100 may be configured to perform the actions performed by the first access network device in the foregoing method embodiments. In this case, the communication apparatus 1100 may be the first access network device or a component that can be configured in the first access network device. The transceiver unit 1110 is configured to perform the receiving and sending-related operations at the first access network device in the foregoing method embodiments. The processing unit 1120 is configured to perform the processing-related operations at the first access network device in the foregoing method embodiments.

In a design, the communication apparatus 1100 is configured to perform the actions performed by the first access network device in the embodiment shown in FIG. 4, and the transceiver unit 1110 is configured to perform S403.

In another design, the communication apparatus 1100 is configured to perform the actions performed by the first access network device in the embodiment shown in FIG. 5, the transceiver unit 1110 is configured to perform S501, and the processing unit 1120 is configured to perform S502 and S503.

Alternatively, the communication apparatus 1100 may be configured to perform the actions performed by the network device in the foregoing method embodiments. In this case, the communication apparatus 1100 may be the network device or a component that can be configured in the network device. The transceiver unit 1110 is configured to perform the receiving and sending-related operations at the network device in the foregoing method embodiments. The processing unit 1120 is configured to perform the processing-related operations at the network device in the foregoing method embodiments.

In a design, the communication apparatus 1100 is configured to perform the actions performed by the network device in the embodiment shown in FIG. 6, the transceiver unit 1110 is configured to perform S603, and the processing unit 1120 is configured to perform S601 and S602.

On the one hand, the communication apparatus 1100 may implement steps or procedures performed by the first access and mobility management function network element in the method 400 and the method 500 according to embodiments of this application. The communication apparatus 1100 may include units configured to perform the methods performed by the first access and mobility management function network element in the method 400 in FIG. 4 and the method 500 in FIG. 5. In addition, the units in the communication apparatus 1100 and the foregoing other operations and/or functions are separately intended to implement corresponding procedures of the method 400 in FIG. 4 and the method 500 in FIG. 5.

On the other hand, the communication apparatus 1100 may implement steps or procedures performed by the first access network device in the method 400 and the method 500 according to embodiments of this application. The communication apparatus 1100 may include units configured to perform the methods performed by the first access network device in the method 400 in FIG. 4 and the method 500 in FIG. 5. In addition, the units in the communication apparatus 1100 and the foregoing other operations and/or functions are separately intended to implement corresponding procedures of the method 400 in FIG. 4 and the method 500 in FIG. 5.

On still another hand, the communication apparatus 1100 may implement steps or procedures performed by the network device in the method 600 according to the embodiment of this application. The communication apparatus 1100 may include units configured to perform the method performed by the network device in the method 600 in FIG. 6. In addition, the units in the communication apparatus 1100 and the foregoing other operations and/or functions are separately intended to implement corresponding procedures of the method 600 in FIG. 6.

It should be understood that a specific process in which the units perform the foregoing corresponding steps is described in detail in the foregoing method embodiments, and for brevity, details are not described herein.

The processing unit 1120 in the foregoing embodiments may be implemented by at least one processor or a processor-related circuit. The transceiver unit 1110 may be implemented via a transceiver or a transceiver-related circuit. The transceiver unit 1110 may also be referred to as a communication unit or a communication interface. The storage unit may be implemented by at least one memory.

As shown in FIG. 12, an embodiment of this application further provides a communication apparatus 1200. The communication apparatus 1200 includes a processor 1210. The processor 1210 is coupled to a memory 1220. The memory 1220 is configured to store a computer program or instructions and/or data. The processor 1210 is configured to execute the computer program or the instructions and/or the data stored in the memory 1220, so that the methods in the foregoing method embodiments are performed.

Optionally, the communication apparatus 1200 includes one or more processors 1210.

Optionally, as shown in FIG. 12, the communication apparatus 1200 may further include the memory 1220.

Optionally, the communication apparatus 1200 includes one or more memories 1220.

Optionally, the memory 1220 may be integrated with the processor 1210, or separately disposed.

Optionally, as shown in FIG. 12, the communication apparatus 1200 may further include a transceiver 1230, and the transceiver 1230 is configured to receive and/or send a signal. For example, the processor 1210 is configured to control the transceiver 1230 to receive and/or send a signal.

In a solution, the communication apparatus 1200 is configured to implement the operations performed by the first access and mobility management function network element in the foregoing method embodiments.

For example, the processor 1210 is configured to implement the processing-related operations performed by the first access and mobility management function network element in the foregoing method embodiments. The transceiver 1230 is configured to implement the receiving and sending-related operations performed by the first access and mobility management function network element in the foregoing method embodiments.

In another solution, the communication apparatus 1200 is configured to perform the operations performed by the first access network device in the foregoing method embodiments.

For example, the processor 1210 is configured to perform the processing-related operations performed by the first access network device in the foregoing method embodiments. The transceiver 1230 is configured to implement the receiving and sending-related operations performed by the first access network device in the foregoing method embodiments.

In still another solution, the communication apparatus 1200 is configured to implement the operations performed by the network device in the foregoing method embodiments.

For example, the processor 1210 is configured to implement the processing-related operations performed by the network device in the foregoing method embodiments. The transceiver 1230 is configured to implement the receiving and sending-related operations performed by the network device in the foregoing method embodiments.

An embodiment of this application provides a communication apparatus 1300. The communication apparatus 1300 may be a network device or a chip. The communication apparatus 1300 may be configured to perform the operations performed by the network device in the foregoing method embodiments. The network device may include the first access and mobility management function network element, the first access network device, or the network device in the foregoing embodiments.

When the communication apparatus 1300 is the network device, FIG. 13 is a simplified schematic diagram of a structure of a network device 1300. The network device includes a part 1310 and a part 1320. The part 1310 is mainly configured to send and receive a radio frequency signal and perform conversion between the radio frequency signal and a baseband signal. The part 1320 is mainly configured to perform baseband processing, control the network device, and the like. The part 1310 may be usually referred to as a transceiver unit, a transceiver machine, a transceiver circuit, a transceiver, or the like. The part 1320 is usually a control center of the network device, and may be usually referred to as a processing unit, configured to control the network device to perform the processing operations at the first access and mobility management function network element, the first access network device, or the network device in the foregoing method embodiments.

The transceiver unit in the part 1310 may also be referred to as a transceiver machine, a transceiver, or the like. The transceiver unit includes an antenna and a radio frequency circuit. The radio frequency circuit is mainly configured to perform radio frequency processing. Optionally, a component for implementing a receiving function in the part 1310 may be considered as a receiving unit, and a component for implementing a sending function may be considered as a sending unit. In other words, the part 1310 includes the receiving unit and the sending unit. The receiving unit may also be referred to as a receiving machine, a receiver, a receiving circuit, or the like. The sending unit may be referred to as a transmitter machine, a transmitter, a transmitting circuit, or the like.

The part 1320 may include one or more boards, and each board may include one or more processors and one or more memories. The processor is configured to read and execute a program in the memory, to implement a baseband processing function and control the base station. If there are a plurality of boards, the boards may be interconnected with each other, to enhance a processing capability. In an optional implementation, a plurality of boards may share one or more processors, a plurality of boards may share one or more memories, or a plurality of boards may simultaneously share one or more processors.

For example, in an implementation, the transceiver unit in the part 1310 is configured to perform the receiving and sending-related steps performed by the first access network device in the embodiment shown in FIG. 4 or FIG. 5. The part 1320 is configured to perform the processing-related steps performed by the first access network device in the embodiment shown in FIG. 4 or FIG. 5.

In a design, the network device 1300 is configured to perform the actions performed by the first access and mobility management function network element in the embodiment shown in FIG. 4, the transceiver unit 1310 is configured to perform S403, and the processing unit 1320 is configured to perform S401 and S402.

In another design, the network device 1300 is configured to perform the actions performed by the first access and mobility management function network element in the embodiment shown in FIG. 5, and the transceiver unit 1310 is configured to perform S501.

For example, in another implementation, the transceiver unit in the part 1310 is configured to perform the receiving and sending-related steps performed by the first access network device in the embodiment shown in FIG. 4 or FIG. 5. The part 1320 is configured to perform the processing-related steps performed by the first access network device in the embodiment shown in FIG. 4 or FIG. 5.

In a design, the network device 1300 is configured to perform the actions performed by the first access network device in the embodiment shown in FIG. 4, and the transceiver unit 1310 is configured to perform S403.

In another design, the network device 1300 is configured to perform the actions performed by the first access network device in the embodiment shown in FIG. 5, the transceiver unit 1310 is configured to perform S501, and the processing unit 1320 is configured to perform S502 and S503.

For example, in still another implementation, the transceiver unit in the part 1310 is configured to perform the receiving and sending-related steps performed by the network device in the embodiment shown in FIG. 6. The part 1320 is configured to perform the processing-related steps performed by the network device in the embodiment shown in FIG. 6.

In a design, the network device 1300 is configured to perform the actions performed by the network device in the embodiment shown in FIG. 6, the transceiver unit 1310 is configured to perform S603, and the processing unit 1320 is configured to perform S601 and S602.

It should be understood that FIG. 13 is merely an example instead of a limitation. The network device including the transceiver unit and the processing unit may not depend on the structure shown in FIG. 13.

When the communication apparatus 1300 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the first access and mobility management function network element, the method performed by the first access network device, or the method performed by the network device in the foregoing method embodiments.

For example, when the computer program is executed by a computer, the computer is enabled to implement the method performed by the first access and mobility management function network element, the method performed by the first access network device, or the method performed by the network device in the foregoing method embodiments.

An embodiment of this application further provides a computer program product including instructions. When the instructions are executed by a computer, the computer is enabled to implement the method performed by the first access and mobility management function network element, the method performed by the first access network device, or the method performed by the network device in the foregoing method embodiments.

An embodiment of this application further provides a communication system. The communication system includes the first access and mobility management function network element and the first access network device in the foregoing embodiments.

It may be clearly understood by a person skilled in the art that, for convenience and brief description, for explanations and beneficial effect of related content in any communication apparatus provided above, refer to the corresponding method embodiment provided above. Details are not described herein again.

In this embodiment of this application, the terminal device or the network device may include a hardware layer, an operating system layer running at the hardware layer, and an application layer running at the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device, a network device, or a functional module that is in a terminal device or a network device and that can invoke and execute the program.

Aspects or features of this application may be implemented as a method, an apparatus or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

In the several embodiments provided in this application, it should be understood that the disclosed apparatus and method may be implemented in other manners. For example, the foregoing apparatus embodiments are only examples. For example, division into the foregoing units is only logical function division, and may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, function units in embodiments of this application may be integrated into one unit, each of the units may exist alone physically, or two or more units are integrated into one unit.

All or some of the foregoing embodiments may be implemented by using software, hardware, firmware, or any combination thereof.

When software is used to implement the embodiments, all or some of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A slice-based communication method, comprising:
obtaining, by a first access and mobility management function network element, information about a target network slice for a terminal device;
determining, by the first access and mobility management function network element, that at least one network slice in the target network slice corresponds to a session in an active state of the terminal device; and
sending, by the first access and mobility management function network element to a first access network device, indication information for handing over the session in the active state to a cell of a tracking area TA that supports the target network slice.

2. The method according to claim 1, wherein the indication information is the information about the target network slice.

3. The method according to claim 1, wherein the method further comprises:
sending, by the first access and mobility management function network element, the information about the target network slice to the first access network device.

4. The method according to any one of claims 1 to 3, wherein the obtaining, by a first access and mobility management function network element, information about a target network slice for a terminal device comprises:
obtaining, by the first access and mobility management function network element, the target network slice based on a used network slice in a first allowed network slice for the terminal device.

5. The method according to claim 4, wherein the obtaining, by the first access and mobility management function network element, the target network slice based on a used network slice in a first allowed network slice comprises:
determining, by the first access and mobility management function network element, the target network slice based on the used network slice in the first allowed network slice and a to-be-used network slice for the terminal device.

6. The method according to any one of claims 1 to 3, wherein the obtaining, by a first access and mobility management function network element, information about a target network slice for a terminal device comprises:
receiving, by the first access and mobility management function network element, the information about the target network slice from a network slice selection function network element.

7. The method according to any one of claims 1 to 6, wherein the method further comprises:
storing, by the first access and mobility management function network element, the target network slice to a context of the terminal device; and
after the session in the active state is handed over, receiving, by the first access and mobility management function network element, a registration request of the terminal device, and determining a second allowed network slice for the terminal device based on the target network slice in the context.

8. The method according to any one of claims 1 to 6, wherein the method further comprises:
storing, by the first access and mobility management function network element, the target network slice to a context of the terminal device; and
sending, by the first access and mobility management function network element, information about the context to a second access and mobility management function network element, wherein the target network slice in the information about the context is used to determine a second allowed network slice for the terminal device after the session in the active state is handed over and a registration request is initiated.

9. The method according to any one of claims 1 to 8, wherein the method further comprises:
sending, by the first access and mobility management function network element to the first access network device, radio access technology/frequency selection priority RFSP information corresponding to the target network slice, wherein the RFSP information is used to determine a radio measurement instruction, and the radio measurement instruction is used by the terminal device to discover, before the session in the active state is handed over, the cell of the TA that supports the target network slice.

10. A slice-based communication method, comprising:
receiving, by a first access network device, information about a target network slice for a terminal device from a first access and mobility management function network element;
determining, by the first access network device, to hand over a session that is in an active state, that is of the terminal device, and that corresponds to at least one network slice in the target network slice; and
handing over, by the first access network device, the session in the active state to a cell of a tracking area TA that supports the target network slice.

11. The method according to claim 9, wherein the determining, by the first access network device, to hand over a session that is in an active state, that is of the terminal device, and that corresponds to at least one network slice in the target network slice comprises:
receiving, by the first access network device from the first access and mobility management function network element, indication information for handing over the session in the active state to the cell of the TA that supports the target network slice; and
determining, by the first access network device based on the indication information, to hand over the session in the active state.

12. The method according to claim 11, wherein the indication information is the information about the target network slice.

13. The method according to claim 10, wherein the determining, by the first access network device, to hand over a session that is in an active state, that is of the terminal device, and that corresponds to at least one network slice in the target network slice comprises:
determining, by the first access network device based on the session that is in the active state and that corresponds to the at least one network slice in the target network slice, to hand over the session in the active state.

14. The method according to any one of claims 10 to 13, wherein the method further comprises:
determining, by the first access network device, a radio measurement instruction of the terminal device, wherein the radio measurement instruction is used to discover, before the session in the active state is handed over, the cell of the TA that supports the target network slice.

15. The method according to claim 14, wherein the determining, by the first access network device, a radio measurement instruction of the terminal device comprises:
determining, by the first access network device, the radio measurement instruction based on the information about the target network slice.

16. The method according to claim 15, wherein the determining, by the first access network device, the radio measurement instruction comprises:
receiving, by the first access network device from the first access and mobility management function network element, radio access technology/frequency selection priority RFSP information corresponding to the target network slice; and
determining, by the first access network device, the radio measurement instruction based on the RFSP information.

17. A slice-based communication method, comprising:
obtaining, by a network device, information about a requested network slice for a terminal device and at least one piece of information about a used network slice for the terminal device or a to-be-used network slice for the terminal device;
determining, by the network device, a first allowed network slice for the terminal device based on the requested network slice and at least one of the used network slice or the to-be-used network slice; and
sending, by the network device, information about the first allowed network slice.

18. The method according to claim 17, wherein the method further comprises:
obtaining, by the network device, information about a network slice supported by a tracking area TA in which the terminal device is located;
when the TA does not support at least one network slice in the to-be-used network slice, determining, by the network device, a target network slice for the terminal device based on the requested network slice and the at least one of the used network slice or the to-be-used network slice; and
sending, by the network device, information about the target network slice.

19. The method according to claim 18, wherein the determining, by the network device, a target network slice for the terminal device based on the requested network slice and the at least one of the used network slice or the to-be-used network slice comprises:
selecting, by the network device, a network slice that belongs to the at least one of the used network slice or the to-be-used network slice and a network slice that belongs to the requested network slice, to constitute the target network slice.

20. The method according to claim 18 or 19, wherein at least one network slice in the target network slice does not belong to the network slice supported by the TA.

21. The method according to any one of claims 17 to 20, wherein the determining, by the network device, a first allowed network slice for the terminal device based on the requested network slice and at least one of the used network slice or the to-be-used network slice comprises:
selecting, by the network device, the network slice that belongs to the at least one of the used network slice or the to-be-used network slice and that belongs to the requested network slice, to constitute the first allowed network slice.

22. The method according to any one of claims 17 to 21, wherein the network device comprises a first network slice selection function network element.

23. The method according to claim 22, wherein the obtaining, by a network device, at least one piece of information about a used network slice for the terminal device or a to-be-used network slice for the terminal device comprises:
receiving, by the network device, the at least one piece of information about the used network slice and the to-be-used network slice that are from an access and mobility management function network element.

24. The method according to any one of claims 17 to 21, wherein the network device comprises an access and mobility management function network element.

25. The method according to claim 24, wherein the method further comprises:
receiving, by the network device, a second allowed network slice for the terminal device from a second network slice selection function network element;
selecting, by the network device from the second allowed network slice, the network slice that belongs to the at least one of the used network slice or the to-be-used network slice, to constitute a third allowed network slice for the terminal device; and
sending, by the network device, information about the third allowed network slice to the terminal device.

26. The method according to claim 25, wherein the method further comprises:
obtaining, by the network device, information about a first rejected network slice for the terminal device;
deleting, by the network device, a network slice that is supported by any TA in a registration area RA for the terminal device and that is in the first rejected network slice, to obtain a second rejected network slice for the terminal device, wherein the RA is determined based on the second allowed network slice; and
sending, by the network device, information about the second rejected network slice to the terminal device.

27. The method according to any one of claims 24 to 26, wherein the obtaining, by a network device, at least one piece of information about a used network slice or a to-be-used network slice comprises at least one of the following manners:
determining, by the network device, the information about the used network slice based on session status information of the terminal device;
determining, by the network device, the information about the to-be-used network slice based on the requested network slice and the third allowed network slice in a context of the terminal device; or
receiving, by the network device, communication analysis result information of the terminal device from a network data analytics function network element, and determining the information about the to-be-used network slice based on the communication analysis result information.

28. A communication apparatus, comprising:
a memory, configured to store a computer program; and
a processor, configured to execute the computer program stored in the memory, so that the apparatus performs the method according to any one of claims 1 to 9, claims 10 to 16, or claims 17 to 27.

29. A computer-readable storage medium, wherein the computer-readable storage medium stores a computer program, and when the computer program runs on a computer, the computer is enabled to perform the method according to any one of claims 1 to 9, claims 10 to 16, or claims 17 to 27.

30. A communication system, comprising a first access and mobility management function network element and a first access network device, wherein
the first access and mobility management function network element is configured to perform the method according to any one of claims 1 to 9; and
the first access network device is configured to perform the method according to any one of claims 10 to 16.
